# EUROPEAN PATENT APPLICATION

(11) **EP 4 764 194 A1**
(43) Date of publication of application: **24.06.2026**
(21) Application number: 25224694.7
(22) Date of filing: 17.12.2025
(51) Int. Cl.: F02K 1/34, B64D 33/04, F02K 1/36, F02K 1/38, F02K 1/46, F02K 3/02, F02K 3/04, F02K 3/077

(54) **THRUST ADDITION**

(30) Priority: 20.12.2024 US 202463736803 P; 14.08.2025 WO PCT/CA2025/051071
(71) Applicant: Venture Kel Inc., Ottawa ON K2A 1Y1 (CA); Kelly, Philip, Ottawa ON K2A 1Y1 (CA)
(72) Inventor: Kelly, Philip, Ottawa, ON K2A 1Y1 (CA); Venturino, Gemma, Ottawa, K2A 1Y1 (CA)
(74) Representative: Serjeants LLP

(57) **Abstract**

A thrust-addition system is provided and configured to be mounted to a vehicle (100) and is also configured to propel the vehicle forward. In accordance with example embodiments, a fan (104) is arranged in a duct (103) within a vehicle, such as an air vehicle, with blow-in intake doors (101), serving as a primary purpose of exhaust as a thrust addition system, while also providing temperature, humidity, velocity, and/or deflection at the outlet (106) for a secondary purpose to reduce heat signature, contrails, radar cross section, noise and/or infrared detection.

## Description

### CROSS-REFERENCE TO RELATED PATENT APPLICATIONS

This application claims the benefit and the priority date of prior U.S. Provisional Application No. 63/736,803, filed December 20, 2024, entitled THRUST ADDITION, and which is incorporated herein by reference.

### TECHNICAL FIELD

The technical field pertains to thrust addition for engines (such as gas engines), and more particularly, thrust addition that may include signature management of infrared radiation, noise, and/or contrails associated with such engines.

### BACKGROUND

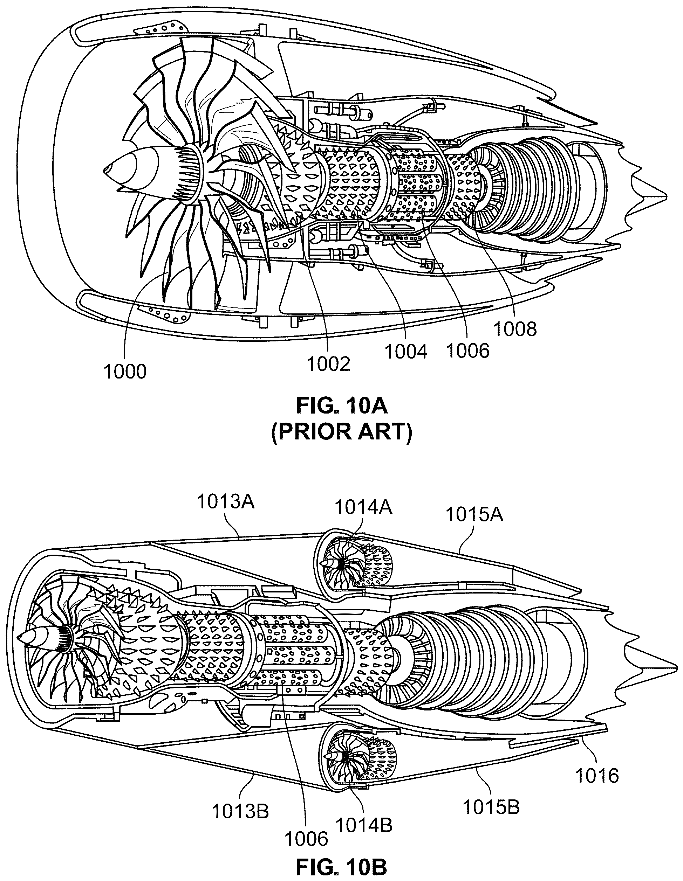

It is known to provide a dual-in-line thrust addition system configured as an afterburner, which is mounted aft of a gas turbine of a vehicle, such as an aircraft. The dual-in-line thrust augmentation system can be configured as an afterburner, used to increase the thrust output of a gas turbine. This system can be located aft of the gas turbine of an aircraft and can be used to optimize aircraft speed. By facilitating the combustion of additional fuel within an exhaust stream, the afterburner can increase thrust, thereby enabling rapid acceleration, enhancing engine efficiency, and/improving aircraft performance in diverse conditions. Separately, FIG. 10A shows a known gas turbofan for a commercial airliner with a fan 1000, a compressor 1002, a combustor 1004 or a combustion chamber, a turbine 1006, and a mixer 1008 arranged in a serial in-line positioning arrangement, one after the other. The known gas turbofan typically has a large intake and uses an inline compressor to enable high bypass airflow separate from the air passing through the turbine stages.

For instance, it is desirable for fighter aircraft to reduce signs of detection, e.g. contrails in the air, heat signatures, and/or noise, etc. Many types of devices have been conceived to create stealth aircraft; however, each has its shortcomings and does not fully mask all detection mechanisms from detection by an adversary force. For example, while a modern fighter aircraft contains many stealth features, the aircraft can still be seen from the ground due to the production of contrails when the aircraft moves through (along) the contrail layer. The contrail layer refers to a specific altitude or atmospheric layer where contrails (short for condensation trails) are likely to form and persist. Contrails are the visible white streaks left behind by aircraft flying at high altitudes, typically formed when hot, humid exhaust gases from jet engines mix with the cold, low-pressure air in the upper atmosphere. Moreover, another example is when using an afterburner for thrust addition, the undesirable infrared heat signature is significantly increased.

There are many drawbacks associated with traditional systems. Gas turbine engines have high maintenance requirements related to onerous inspection regimes and routine maintenance to ensure the safe and optimal operation of the in-line combustion chamber, which is oriented in-line or in series relative to a fan, a compressor, a turbine, and a mixer. The inline arrangement or design has led to large diameters for commercial engines, causing issues for engine placement on pylons positioned under the wings of the aircraft, with space limited by undercarriage height. Furthermore, in a fighter aircraft application, an afterburner has limited usage applications because it requires a higher fuel burn rate compared to the central gas turbine (also referred to as a main gas turbine) fitted to a combat aircraft. Afterburner fuel burn rates are significantly higher than the fuel burn rate for regular operation of combat aircraft at military power settings. Furthermore, the large size of an afterburner takes up valuable space at the rear section (back) of a fighter aircraft or combat jet. Additional fuel must be stored onboard the combat aircraft for use with the afterburner, thereby increasing the aircraft's weight disadvantageously. As such, afterburners are typically only used for thrust addition during takeoff, during combat, and/or defensive maneuvers.

With precise rotational speed (RPM) control, noise attenuation may be achieved for the main engine exhaust by adding air of lower velocity from the duct surrounding the higher-velocity main engine exhaust. This may take the form of an annular ring, currently available in noise reduction kits, that surrounds the hot exhaust air of a gas turbine. It provides for the mixing of air through mechanical turbulent mixing of the air from the hot gas's fast exhaust with ambient air. High-bypass turbofans utilize this same principle but have a large frontal area facing the freestream air throughout all phases of flight.

For example, there are various known patents in this field. For example, United States (U.S.) Patent Number 3,537,266A discloses an ion engine thrust multiplier. U.S. Patent Number 4,836,469A discloses a hush kit for jet aircraft engine noise. U.S. Patent Number 5,592,813A discloses a hush kit for jet aircraft engine noise. U.S. Patent Number 5,699,662A discloses an infrared suppression exhaust duct system for a turboprop propulsion system for an aircraft. U.S. Patent Number 6,85,142A discloses an afterburner for a gas turbine engine. U.S. Patent Number 6,988,674B2 discloses a method and apparatus for suppressing infrared signatures.

As another example of increasing thrust through the use of fans, U.S. Patent Number 12,187,443B2 issued to Bombardier Inc. discloses electric fans for managing isolated airflow paths to enhance aircraft thrust. First and second electric fans are disposed radially about a roll axis of the aircraft and adjacent to an aft end of the aircraft, and the first electric fan and the second electric fan are configured to intake boundary layer air to form the first air flow and the second air flow. The '443 patent describes isolated airflow paths. This system, however, is always open to the freestream air and surrounds the auxiliary power unit, serving as a power source, not the main propulsive engines. Some potential drawbacks include: (A) the limited thrust contribution is likely due to the fans being located around the auxiliary power unit (APU) rather than the main engines, which means their contribution to total thrust is modest, thereby limiting their effectiveness in high-demand flight phases, such as takeoff or climb; (B) always open to freestream air results in (i) a drag penalty resulting from being constantly open to freestream airflow, which may introduce parasitic drag, especially when the fans are not actively contributing to thrust, and (ii) reduced control resulting from the inability to close or modulate the airflow path could limit aerodynamic efficiency in varying flight conditions; (C) power source limitations resulting from electric power dependency; relying on electric fans means the system draws from the aircraft's electrical supply, which may be constrained, especially in older or non-electric aircraft architectures; (D) added complexity and weight resulting from (i) integration that requires the addition of fans and ducting around the APU, which increases system complexity and weight, potentially offsetting the thrust gains, and/or (ii) increased maintenance since more components mean more potential failure points and increased maintenance requirements and (E) boundary layer air limitations resulting from low-energy airflow; boundary layer air is slower and more turbulent than freestream air, which may limit the efficiency of the fans in generating useful thrust.

U.S. Patent Number 12,296,897B2 to McMurtry Automotive Limited discloses an automobile system that generates aerodynamic downforce using an airflow restrictor mechanism. The '897 patent describes a downforce system for a vehicle that includes a restrictor that defines a region between the vehicle and the ground, a pressure source (e.g., a fan or vacuum) that creates a pressure differential to generate downforce, a rim that forms a partial seal with the ground, and a dust and debris removal system to prevent contaminants from exiting the system. Some potential drawbacks include the following: (A) higher energy consumption resulting from the continuous operation of fans or vacuum systems to maintain downforce, which can significantly increase the vehicle's energy consumption and reduce its overall efficiency and travel range; (B) higher mechanical complexity resulting from using more moving parts, by the inclusion of fans, seals, and debris removal systems, which increases the likelihood of failure and/or the need for maintenance; (C) A higher weight penalty resulting from additional components that increase the vehicle's weight, potentially offsetting some performance gains; (D) ground clearance sensitivity, which results from performance that depends on proximity to the ground, as this is a system that relies on a defined region between the vehicle and the ground surface. Uneven terrain or changes in ride height could reduce travel effectiveness and/or cause damage. (E) Debris and contamination risks arise from exposure to road debris. Despite the operation of the dust and debris removal system, the mechanism remains vulnerable to clogging and/or wear from road contaminants from driving conditions. (F) increased noise, such as fan noise: high-speed fans can generate significant noise, which may be undesirable in both road and track environments. (G) Acceleration lags behind braking and/or cornering abilities in the forces applied to the vehicle.

### SUMMARY

In accordance with one example embodiment, there is provided an aircraft with a thrust-addition duct system including: a duct with blow-in intake doors or suitable mechanism or any equivalent thereof, a fan embedded in the duct, and an annular ring or other exhaust outlet surrounding a gas turbine exhaust, in which the duct is not ordinarily open to free stream air for the case where no thrust is added. A preferred example embodiment may provide at least one of the following technical advantages: (A) blow-in intake doors for allowing on-demand air ingestion to reduce drag and/or improve stealth and/or or efficiency for the case where thrust augmentation is not needed or required; (B) a fan(s) embedded in the duct that enables active airflow control and/or thrust augmentation without additional direct fuel combustion to improve fuel efficiency and/or reduce thermal signature and/or reduction in contrails; (C) an annular ring or other configuration exhaust outlet that can provide uniform thrust distribution; (D) a duct that is not open to free stream air when inactive, which can minimize parasitic drag, radar and thermal signature to improve cruise efficiency and/or stealth capabilities; and (E) non-afterburning augmentation that can allow thrust boost without significantly higher fuel consumption, to make it suitable for hybrid-electric vehicles or low-emission propulsion systems. The example embodiment may offer a modular, efficient, and potentially stealthier alternative to known afterburners, particularly in next-generation aircraft, Unmanned Aerial Vehicles (UAVs), or aircraft having a hybrid propulsion system where fuel economy, radar signature reduction, thermal signature reduction, contrail reduction, and/or drag reduction may be desired.

In another example embodiment, there is provided (A) a thrust addition duct possessing a dual-in-line feature, (B) a separable air-tight duct feature between a blow-in door and an impeller and/or a fan or a thrust addition system, and/or (C) an exhaust that surrounds, at least in part, a central gas turbine exhaust (also called a main gas turbine exhaust) with air of different temperature and/or speed characteristics.

A major embodiment provides thrust addition to or for various vehicles, including aircraft, spacecraft, watercraft, drones, motorized vehicles with tires or tracks, electric vehicles with tires, trains, submarines, and others.

More specifically, a further example embodiment provides a fan embedded or positioned in a duct that is not ordinarily, or normally, open to the free stream air for the case where no thrust is added to the vehicle. The duct includes a closure mechanism at the intake, which comprises an aerodynamic device, spring, or other mechanism configured to hold a blow-in door closed during non-thrust additive flight. The intake may be of a bifurcated arrangement or design, configured to have two or more inlets. These inlets can contribute to aerodynamic effects, such as maintaining airflow boundary layer attachment on the top sides of lifting surfaces, which improves lifting performance and/or produces downforce when the inlets and intakes are positioned underneath a vehicle, as well as offering other technical benefits.

The duct may be provided with thrust, adding airflow from an impeller device that opens the intake blow-in door, and optionally an exhaust door, through an application of aerodynamic force. This thrust addition to the airflow is generated by an impeller, such as a fan(s) and/or an airflow-inducing mechanism(s), embedded in the duct. The exhaust may benefit from thrust deflection at the outlet for at least one secondary purpose, such as main engine infra-red signature masking, noise reduction, contrail reduction or elimination, and/or alignment to reduce pitching moments if mounted off the vehicle thrust line. Exhaust may also be vectored to an optimum or desired angle based on the location of installation. A bifurcated exhaust duct may also be used to maintain symmetrical thrust, in addition to the vehicle's intended application. Regenerative air braking may be provided if the ducts are opened to slow an air vehicle and utilize the energy to recharge an energy storage system (for example, a battery or supercapacitor system) through the impeller, which acts as an electrical generator.

A variable area outlet(s) may allow for an additional flow area to accommodate the discharge of a higher volume of accelerated air. An annular shape may be adopted if a central gas turbine exhaust is to be surrounded by duct air of a different velocity, reduced temperature, and/or reduced humidity.

A further example embodiment may possess at least one or more technical benefits and/or advantages over known thrust addition methods and systems. In particular, this embodiment can utilize a reliable, airtight, separable duct arrangement between the intake and the fan(s), an airflow-inducing mechanism(s), and/or exhaust(s) that creates no drag or less drag on the vehicle when not in use. Such a mechanism may afford component placement flexibility as well as user cost reductions in non-thrust addition and cruise flight conditions.

Moreover, the separable duct may not require rigorous inspection, at least in part due to the absence of an in-line combustion chamber, thereby reducing maintenance labour time and/or associated costs. Due to its flexibility and simplicity in use and installation, the thrust-addition duct may result in reduced manufacturing costs and/or lower ongoing maintenance costs. It will be appreciated that bearing(s) life may be the primary driving parameter for maintenance, rather than the higher maintenance requirements associated with a combustion chamber in-line traditional turbofan.

A further example embodiment can have an ability to allow both the present invention and a conventional compliant main-thrust provider (such as an engine) to be mounted to a vehicle. For instance, user specifications may require that thrust addition be positioned on both sides of a vehicle, such as an aircraft fuselage, wing pylon, or an air vehicle structure. Generally, a conventional engine installation, characterized by high assembly costs, can be supported by at least one thrust-addition duct. To minimize additional assembly costs, the second thrust-addition duct(s) may be a simple duct(s) with a blow-in door(s) and impeller(s) or fan(s) embedding process characterized by a relatively lower installation cost. The thrust addition duct(s), given its separable principle, is distinct from the main thrust provision of an engine in a vehicle, such as an aircraft or an air vehicle.

In addition to the foregoing attributes, the embodiments of the thrust addition system may possess other benefits over conventional devices. Electrical features of the embedded impeller(s) or fan(s) (centrally driven or rim driven) may include improved revolutions per minute (RPM) rise times and/or lower drive draw and/or lower fuel consumption, as opposed to those for typical thrust addition systems such as an afterburner or an engine capable of higher thrust output. Achieving power density in thrust addition can be the primary driving parameter, rather than energy density, due to the defined periods of application. Furthermore, concerns associated with infrared (IR) radiation from compliant main engines with afterburners can be reduced and/or preferably eliminated if the present thrust-addition system is deployed in military applications.

There may be applications for using the thrust-addition duct of the present system in infrared (IR) protection mode. A traditional afterburner has limited usage applications because it requires a higher fuel burn rate compared to the central gas turbine (also referred to as a main gas turbine) fitted to a combat aircraft. The fuel burn associated with power generation for thrust addition in the present system can be an order of magnitude less than the fuel burn rate of a traditional afterburner.

One example benefit of the thrust-addition duct in the present system, which utilizes electric impellers within the duct, is that it may not require additional fuel, unlike an afterburner, to improve mission success. Thus, traditionally, high-fuel-usage vehicle maneuvers would not necessarily impact mission success in such a critical manner.

The weight of the thrust-addition duct system and annular-ring structure may be offset by the fuel savings achieved by not requiring an onboard afterburner. Afterburner fuel burn rates are significantly higher than the fuel burn rate for known combat aircraft. Moreover, the risk of afterburner flameout in cases where the thrust-addition system is used can be eliminated.

For vehicle takeoff, thrust addition can be modulated to be noise-reduction optimized, where the velocity of the thrust-addition duct exhaust in an annular ring configuration, air is tailored or configured to minimize or reduce noise from the gas turbine exhaust. It will be appreciated that this condition can be close to the full power setting for the vehicle's takeoff event.

For landing throttle modulation, using an electric motor within the thrust addition duct will minimize noise from the gas turbine due to RPM changes, thereby providing steady-state power from the gas turbine and/or modulated power from the thrust addition system. Noise primarily originates from a gas turbine during throttle changes; therefore, maintaining steady power settings in a main gas turbine, supported by modulating the thrust addition system, can be beneficial for noise reduction.

Another example embodiment includes a rocket or missile for in-atmosphere rocket launch assistance (rocket motor thrust addition) and/or to create a low infrared signature, benefiting from thrust addition from duct outlet air during the launch (boost) and/or cruise (sustain) phase of flight or travel. The system can provide an environmentally friendly way to add thrust to a rocket or missile within the atmosphere, particularly in the lower atmosphere, and/or reduce the likelihood of missile launch detection in a military scenario. Additionally, if the thrust addition system is not operated, no induced drag is caused thereby. It can also be a separable first stage of a rocket or missile.

A secondary benefit of the thrust addition duct using electric or other impellers within the duct is that it would not use additional fuel. As a rocket or missile has limited fuel due to its high burn rate, the weight of the thrust addition system is likely to be less than the equivalent weight of additional rocket fuel and its associated system weight. Launch (boost) or cruise (sustain) uses would not necessarily impact mission success. An annular shape may be adopted if the main rocket engine exhaust is to be surrounded by duct air of different velocities and temperatures for the uses described above. Optionally, after launch, the system can be jettisoned in a way similar to a booster rocket.

Similarly, the mechanical features of the electrical impeller or fan with motor enable it to tolerate more use cycles than conventional engine devices and, as previously discussed, liberate it from the specialized installation and maintenance protocols required for conventional thrust addition that significantly affect the vehicle's (such as an aircraft's) design outer mold line. The opportunity to distribute the thrust addition system to unconventional locations in parallel on the airframe, combined with the lack of afterburner driving a series position, allows for greater aircraft design options and may include reduced sizing of gas turbine intake(s). It will be appreciated that an embodiment in a blended wing body aircraft is provided in an alternative.

Other embodiments provide a thrust-addition system that may integrate a no-drag design when not in use, a principle that performs thrust addition functions in discrete phases of transit or flight and utilizes a separable thrust principle between the thrust addition and the associated main thrust provider (such as an engine). The no-drag design, when not in use, is the key driver for efficiency that compensates for system-installed weight.

An example embodiment pertains to a fan embedded in a duct that is not normally open to the free stream air, for example, in the case where the vehicle is not generating thrust (such as an air vehicle). The duct includes a closure mechanism at the intake and, optionally, at the exhaust of an aerodynamic device, a spring, or other mechanism that holds the blow-in door closed in non-thrust additive flight. The duct is provided with thrust, which adds airflow that opens the intake blow-in door through aerodynamic force or other equivalent force, such as a spring, actuator, or other mechanism. This addition to the airflow is caused by a fan or an airflow-inducing mechanism embedded or positioned in the duct. The airflow-inducing mechanism, or fan, can be used as an air brake if the duct is opened to slow an air vehicle. The energy from this can be considered regenerative braking energy that can be returned to an energy store.

The duct is adapted and optimized to receive a corresponding fan or an airflow-inducing mechanism such that it can induce the aerodynamic force to open at least one blow-in door and then provide thrust addition to the air vehicle through the duct's exhaust, thereby applying accelerated air. An optional exhaust door(s) can also be incorporated, which may be controlled in a manner similar to the intake blow door, concurrently or separately. This could assist with radar signature management from the rear sector of an aircraft.

The duct is designed to be separably mounted in a vehicle, such as an airborne vehicle, either independently or integrated with the main thrust provision, such as an engine. Energy may be provided directly from a gas turbine, mechanically or electrically, to drive the impellers located within the duct. Energy storage systems (such as a battery(s) and/or a supercapacitor system and any equivalent thereof) may be associated with the thrust addition system. Separate power generation may be embodied using alternative energy sources, such as hydrogen, which has a higher energy density than gasoline and/or aviation fuel. The ducts can be adapted to be associated with through runs and/or airflow-inducing systems, such as a fan(s).

In accordance with one aspect, there is provided an apparatus which comprises a vehicle and a thrust-addition duct system, comprising a duct having blow-in intake doors. A fan can be embedded in the duct. An annular ring exhaust outlet can be configured to surround the exhaust of a gas turbine. The duct is not ordinarily open to free stream air for the case where no thrust is added. The following are further options: the thrust-addition duct system can be configured to be separably mounted in the vehicle, independent of a main thrust provision. The blow-in intake doors can be configured to open in response to aerodynamic force. Each blow-in intake door can be hingedly attached to the duct and biased into a closed position by aerodynamic force, gravity, a suitable mechanism, or a spring, and can be configured to pivot open upon exposure to a threshold aerodynamic pressure induced in the duct urging motion of the apparatus. An energy storage system can provide electrical power, mechanically driven power, a hydrogen power source, or other power to the fan. The annular ring exhaust outlet can be configured to reduce the infrared signature of the gas turbine exhaust. The annular ring exhaust outlet can be configured to reduce the noise signature of the gas turbine exhaust. The thrust-addition duct system can be separately mounted to the vehicle's structure, independent of the main engine. The fan can be configured to decelerate airflow during descent when the inlet door(s) are opened and convert rotational energy into regenerative electrical or other forms of energy. The fan(s) can comprise a rotor(s) coupled to an electric generator, which is configured to convert the rotational energy of the fan into electrical energy during airflow reversal or deceleration, thereby enabling regenerative braking in the case where the vehicle descends. The electrical energy can be generated by an electric generator and stored in an onboard energy storage system, which can be selected from a group consisting of a lithium-ion or other battery, a capacitor bank, or a hybrid power management unit. The duct can comprise a bifurcated exhaust duct to provide symmetrical thrust addition. The fan can be positioned downstream of the blow-in intake doors and upstream of the annular ring exhaust outlet. The thrust-addition duct system can be integrated with various vehicles, including aircraft, wheeled vehicles, and rockets. The annular ring exhaust outlet can be configured to reduce contrails of the gas turbine exhaust. The duct may not be ordinarily open to free stream air in the case where the fan or fans generate no fan thrust. The duct can be open to the free stream air for the case where the fan(s) thrust is selectively generated by the fan(s), so that, in use, the fan(s) thrust exits the duct via the exhaust outlet(s). The blow-in intake doors can be configured to be maintained in a closed configuration during normal flight. The vehicle exhaust can include a gas turbine exhaust. A controller can be configured to activate the fan(s) and open the blow-in intake doors when a thrust increase is commanded. The duct can be annular and be disposed concentrically around a jet engine exhaust nozzle. The airflow control door can comprise a pivoting panel coupled to a pressure-sensitive actuator or suitable mechanism(s). The fan can be configured to operate at a rotational speed ranging from between about 3,000 (preferably about 8,000) and to about 20,000 RPM or higher RPM, which may be specific to a desired application or purpose. The supplemental thrust system can be removably attached to the host vehicle via quick-connect mounts as an optional feature.

In accordance with another aspect, there is provide an apparatus, which comprises a vehicle having a vehicle exhaust configured to exhaust engine thrust therefrom; and a thrust-addition duct system, comprising: a duct(s) having blow-in intake doors; a fan(s) embedded in the duct(s), and said fan(s) configured to generate fan thrust selectively; and an exhaust outlet(s), with optional doors, separate or configured to surround, at least in part, the vehicle exhaust of the vehicle, and the exhaust outlet also configured to be in fluid communication with the duct.

In accordance with another aspect, there is provided an apparatus for use with a vehicle having a vehicle exhaust configured to exhaust engine thrust therefrom; and the apparatus comprises: a thrust-addition duct system, comprising: a duct(s) having blow-in intake doors; a fan(s) embedded in the duct(s), and said fan(s) configured to generate fan thrust selectively; and an exhaust outlet(s), with optional doors, configured to surround, at least in part, the vehicle exhaust of the vehicle, and the exhaust outlet(s) also configured to be in fluid communication with the duct.

In accordance with another aspect, there is provided a method for moving a vehicle including a thrust-addition system, the method comprising: activating the thrust-addition system configured to urge movement of the vehicle or slow the vehicle; and wherein the thrust-addition duct system includes: a fan(s) embedded in a duct with blow-in intake doors and an annular ring exhaust outlet configured to surround a gas turbine exhaust, and wherein the duct is not ordinarily open to free stream air for the case where no thrust is added; and the annular ring exhaust outlet is configured to mix cooler, lower-humidity duct airflow with the gas turbine exhaust such that the resulting exhaust plume exhibits a reduced propensity for visible contrail formation under standard atmospheric conditions.

Other methods may include: a method of vehicle infra-red signature management of at least one motor hot exhaust, such as a gas turbine exhaust or a rocket exhaust, the method comprising: activating the thrust addition system configured to surround said at least one motor hot exhaust, such as the gas turbine exhaust or the rocket exhaust, with cold duct outlet air; a method of vehicle noise signature management including a thrust addition system, the method comprising: activating the thrust addition system configured to surround at least one motor hot exhaust, such as a gas turbine exhaust or a rocket exhaust, with slower duct outlet air; a thrust addition system for a wheeled vehicle, the method comprising: activating the thrust addition system configured to create a low-pressure area under the wheeled vehicle, whereby the method provides benefit from thrust addition from duct outlet air; a thrust-addition duct system of a vehicle, comprising: a duct having blow-in intake doors; a fan embedded in the duct; and an annular ring exhaust outlet configured to surround a gas turbine exhaust; and wherein the duct is not ordinarily open to free stream air for the case where no thrust is added.

Other aspects or embodiments are identified in the claims. Other features of the non-limiting embodiments may now become apparent to those skilled in the art upon review of the following detailed description of the non-limiting embodiments with the accompanying drawings. This Summary is provided to introduce concepts in a simplified form that are further described below in the Detailed Description. This Summary is not intended to identify potentially key features or possible essential features of the disclosed subject matter and is not intended to describe each disclosed embodiment or every implementation of the disclosed subject matter. Many other novel advantages, features, and relationships will become apparent as this description proceeds. The figures and the description that follow more particularly exemplify illustrative embodiments.

### BRIEF DESCRIPTION OF THE DRAWINGS

The non-limiting embodiments may be more fully appreciated by reference to the following detailed description of the non-limiting embodiments when taken in conjunction with the accompanying drawings, in which:
FIG. 1 depicts a side view of an embodiment of a thrust addition duct;
FIG. 2 depicts a plan view of embodiments of thrust addition ducts;
FIG. 3 depicts a plan view of an embodiment of a bifurcated thrust addition duct;
FIG. 4A and FIG. 4B depict a plan view (FIG. 4A) and a side view (FIG. 4B) of embodiments of a thrust addition duct incorporated in an air vehicle to be utilized with a main thrust provider, such as a main engine of a vehicle;
FIG. 5 depicts an embodiment of a quarter-side view of an annular ring, of the thrust addition duct, surrounding a gas turbine exhaust of a vehicle;
FIG. 6 depicts a plan view of an embodiment of the thrust addition duct incorporated in a combat air vehicle to be utilized with a main thrust provider, preferably with a main engine;
FIG. 7A and FIG. 7B depict a plan view (FIG. 7A) and a side view (FIG. 7B) of embodiments of a thrust addition duct incorporated in an uncrewed air vehicle to be utilized with a main thrust provider;
FIG. 8A, FIG. 8B, and FIG. 8C depict side views (FIG. 8A, FIG. 8C) and a plan view (FIG. 8B) of embodiments of the thrust addition duct incorporated in a wheeled vehicle;
FIG. 9 depicts a plan view of an embodiment of the thrust addition duct incorporated in an in-atmosphere rocket as a launch assistance or rocket motor thrust addition; and
FIG. 10A depicts a cross-sectional view of an embodiment of a turbofan of prior art;
FIG. 10B depicts a cross-sectional view of an embodiment of the thrust addition duct incorporated in an engine of a vehicle;
FIG. 11A and FIG. 11B depict side views of embodiments of the thrust addition duct incorporated in an aircraft with engines of FIG. 10A and FIG. 10B, respectively;
FIG. 12A, FIG. 12B, FIG. 12C, FIG. 12D, and FIG. 12E depict a side perspective view (FIG. 12A) and a top view (FIG. 12B, FIG. 12C, FIG. 12D, and FIG. 12E) of embodiments of the thrust addition duct incorporated in a blended wing body of a vehicle; and
FIG. 13A, FIG. 13B, FIG. 13C, FIG. 13D, FIG. 13E, FIG. 13F, FIG. 13G, FIG. 13H, FIG. 13 I, and FIG. 13J depict a front view (FIG. 13A, FIG. 13C, FIG. 13F, FIG. 13G, and FIG. 13J) and a side view (FIG. 13B, FIG. 13D, FIG. 13E, FIG. 13H, and FIG. 13J) of a prior art modular aircraft.

The drawings are not necessarily to scale and may be illustrated by phantom lines, diagrammatic representations and fragmentary views. In certain instances, details unnecessary for an understanding of the embodiments (and/or details that render other details difficult to perceive) may have been omitted. Corresponding reference characters indicate corresponding components throughout the several figures of the drawings. Elements in the several figures are illustrated for simplicity and clarity and have not been drawn to scale. The dimensions of some elements in the figures may be emphasized relative to other elements to facilitate an understanding of the various disclosed embodiments. In addition, common, and well-understood, elements that are useful in commercially feasible embodiments are often not depicted to provide a less obstructed view of the embodiments of the present disclosure.

### DESCRIPTION OF PREFERRED EMBODIMENTS

The following detailed description is merely exemplary and is not intended to limit the embodiments described or the application and uses of the described embodiments. As used, the word "exemplary" or "illustrative" means "serving as an example, instance, or illustration." Any implementation described as "exemplary" or "illustrative" is not necessarily to be construed as preferred or advantageous over other implementations. All of the implementations described below are exemplary implementations provided to enable persons skilled in the art to make or use the embodiments of the disclosure. They are not intended to limit the scope of the disclosure. The claims define the scope of the disclosure. For the description, the terms "upper," "lower," "left," "rear," "right," "front," "vertical," "horizontal," and derivatives thereof shall relate to the examples as oriented in the drawings. There is no intention to be bound by any expressed or implied theory in the preceding Technical Field, Background, Summary or the following detailed description. It is also to be understood that the devices and processes illustrated in the attached drawings, and described in the following specification, are exemplary embodiments (examples), aspects and/or concepts defined in the appended claims. Hence, dimensions and other physical characteristics relating to the embodiments disclosed are not to be considered as limiting, unless the claims expressly state otherwise. It is understood that the phrase "at least one" is equivalent to "a". The aspects (examples, alterations, modifications, options, variations, embodiments and any equivalent thereof) are described regarding the drawings. It should be understood that the disclosure is limited to the subject matter provided by the claims, and that the disclosure is not limited to the particular aspects depicted and described. It will be appreciated that the scope of the meaning of a device configured to be coupled to an item (that is, to be connected to, to interact with the item, etc.) is to be interpreted as the device being configured to be coupled to the item, either directly or indirectly. Therefore, "configured to" may include the meaning "either directly or indirectly" unless specifically stated otherwise.

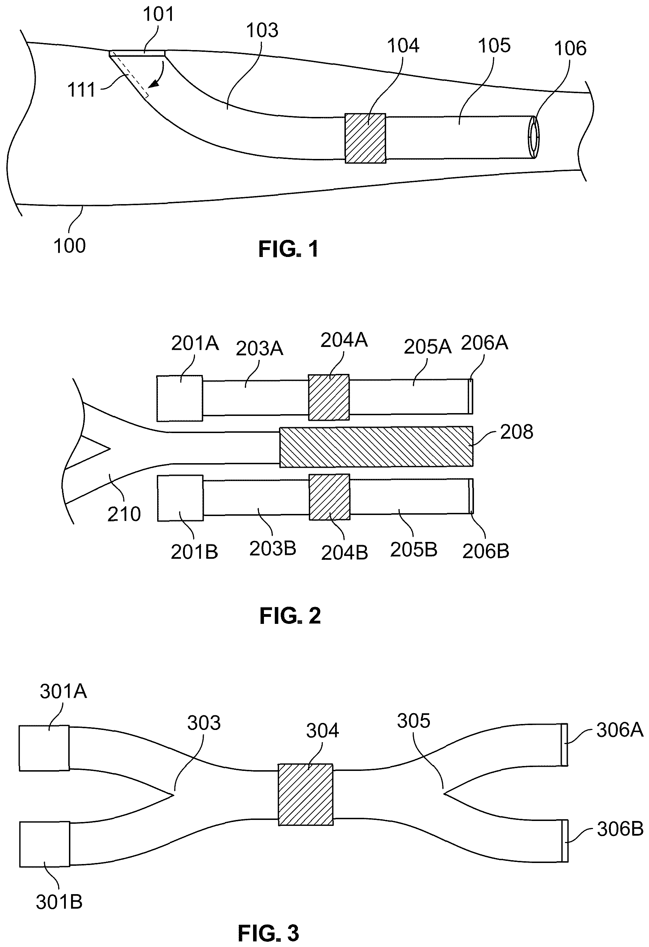

In FIG. 1, a preferred embodiment is depicted, showcasing the functionality of each component. The diagram illustrates an intake blow-in door 101, also known as an airflow control door, in a closed position, an intake blow-in door, in the open position 111, an intake duct 103 or inlet, an impeller fan 104 configured to generate fan thrust or supplemental thrust, an exhaust duct 105, an exhaust outlet 106, and vehicle 100. It will be appreciated that equivalent names for the impeller fan 104 may include "fan", "impeller", "rotor" or any equivalent thereof. A controller (known and not depicted) is configured to activate the impeller fan 104 and open the intake blow-in door 101 when an increase in thrust (supplemental thrust) is commanded, such as beyond nominal engine output provided by the main engine of vehicle 100, etc.

In FIG. 1, a preferred embodiment of the thrust-addition duct system is illustrated in a side view, demonstrating the system's efficiency. The system includes an intake duct 103, which serves as the primary airflow conduit for ambient air for the case where the system is activated. At the front of the intake duct is at least one blow-in intake door 101, illustrated in the closed position (shown in solid lines) and the open position 111 (shown in dashed lines). For cases where thrust addition is not required, door 101 remains closed to maintain aerodynamic efficiency and minimize drag. For cases where airflow demand increases and/or thrust is required, door 101 is shown in an open position 111, allowing ambient air to enter the duct 103.

Referring to FIG. 1, downstream of the intake duct 103 is the impeller fan 104 within the duct 103. Fan 104 is designed or configured to accelerate the incoming air, thereby creating a pressurized flow through the system. Fan 104 can be driven by an energy source, such as an electric motor (not shown in FIG. 1), and may be centrally mounted or rim mounted.

Referring to FIG. 1, the accelerated air exits fan 104 into the exhaust duct 105, which forms the downstream segment of the enclosed flow path. Duct 105 is designed, shaped, and/or dimensioned to guide high-speed airflow toward the aft end of the system while maintaining pressure integrity and/or minimizing flow separation. An optional exhaust door (not shown) can also be incorporated, which may be controlled in a manner similar to the intake blow-in door 101, either together or separately from it. The optional exhaust door can be controlled to open or close in unison with the intake blow-in door 101 or separately therefrom.

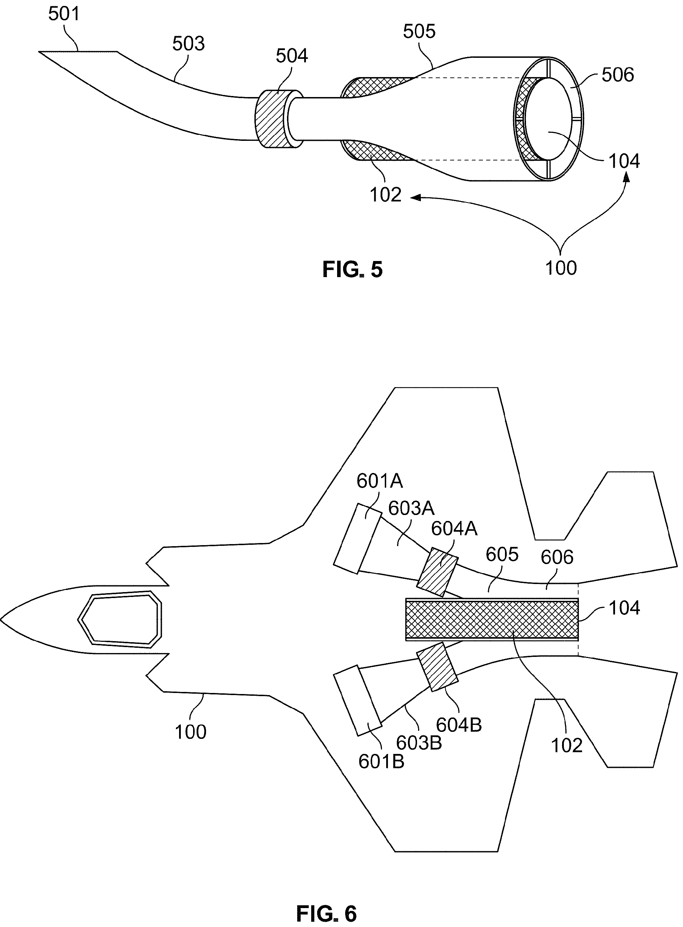

Referring to FIG. 1, exhaust outlet 106, located at the system's terminus, is where the accelerated airflow is discharged from duct 105. In various embodiments described elsewhere (e.g., FIG. 5), exhaust outlet 106 may take the form of an annular ring configured to surround an exhaust (a gas turbine exhaust), which can enable signature reduction in addition to thrust augmentation. In accordance with a preferred embodiment, the annular ring exhaust outlet 106 comprises a circular duct outlet having a radial inner diameter that exceeds the outer diameter of the gas turbine exhaust nozzle by a fixed offset, such as between about 10 mm (millimeters) and about 200 mm, thereby forming a concentric cylindrical shroud around the gas turbine exhaust. The longitudinal extent of the annular ring outlet is configured to terminate within about plus or minus about 50 mm of the main turbine exhaust tip, thereby enabling entrainment and/or mixing of exhaust flows within close proximity. The annular ring may be mounted on structural arms or a ring frame radially connected to the primary exhaust housing, with thermal insulation or high-temperature materials optionally lining the inward-facing wall of the annular ring outlet. The axis of the annular ring exhaust can be generally aligned co-axially with the centerline of the gas turbine exhaust to preserve aerodynamic symmetry and/or fuel mixing effectiveness.

Referring to FIG. 1, it will be appreciated that a hinge or spring mechanism (known and not depicted) may be positioned or located on the intake blow-in door 1. It will be appreciated that the electric power source for the impeller fan 104 may be conventional if desired. It will be appreciated that the intake duct 103 may be sealed for the case where the door 101 is closed, which reinforces the concept of the duct being "not ordinarily open." For clarity, the phrase "not ordinarily open to free stream air" may include "closed during flight conditions, such as cruise flight conditions, and/or below a specific air speed, such as about Mach 0.8. 'Not ordinarily open' means that under nominal cruise or idle thrust conditions, the duct remains closed, opening only under defined thrust augmentation scenarios.

To add further clarity for the term "not ordinarily open to free stream air", in certain embodiments, the thrust augmentation duct includes an airflow control door or panel that governs the duct's exposure to ambient airflow. The phrase "not ordinarily open to free stream air" refers to a configuration in which the duct inlet remains mechanically closed under standard operating conditions-such as cruise flight, idle thrust, or ground taxi-unless a specific thrust augmentation command is issued. The airflow control door may be biased to a closed position via mechanical spring loading, actuator logic, or aerodynamic pressure differential. It may be opened when the system controller detects a predefined operational trigger, such as: (A) a commanded increase in thrust exceeding a baseline threshold (e.g., >20% above cruise thrust), (B) a takeoff or climb phase of flight, (C) a tactical maneuver requiring rapid acceleration or evasive action. When closed, the door forms a flush or recessed seal with the nacelle or duct housing, thereby preventing ambient air from entering the duct and maintaining a low-observable profile. This configuration may ensure that the duct is not passively or continuously exposed to the free stream airflow during normal or routine operation. In some embodiments, the door may be equipped with a position sensor or pressure transducer to confirm its closed state, and the system may log door actuation events for maintenance or mission analysis. The optional exhaust door may be opened under similar conditions.

Referring to FIG. 1, in a preferred example embodiment, each blow-in intake door 101 is pivotally mounted along an upper edge of the intake duct 103 via a hinge mechanism (known and not depicted), such as a mechanical pin hinge or a flexible elastomeric hinge. Doors 101 are biased into a closed position using either (a) a torsional spring (known and not depicted) that urges door 101 against the duct opening, or (b) gravitational bias, wherein the door's center of mass is located below the pivot axis such that the door 101 remains closed under static conditions. The term "closed-door configuration" refers to the condition where the blow-in duct door 101 is mechanically sealed against a nacelle structure, thereby preventing ambient airflow into the duct 103. A nacelle structure is the streamlined enclosure that houses components of an aircraft engine or other systems, typically mounted on the wings or fuselage. It plays a crucial role in both aerodynamics and mechanical integration. During forward motion of vehicle 100, increased dynamic pressure at the intake surface generates an aerodynamic force on the outer face of door 101. When this pressure exceeds a predetermined threshold, which can be tuned based on spring stiffness, door mass, and hinge geometry, the door 101 can pivot inward, allowing airflow into the intake duct 103. Once the pressure drops below this threshold, the biasing mechanism (not depicted) returns the door 101 to its sealed position, minimizing drag and preserving aerodynamic integrity. Stops (known and not depicted) can be included to limit the maximum opening angle, and/or seals or gaskets (known and not depicted) can be positioned along the periphery of the door 101 to ensure a low-leakage seal when the door 101 is closed.

Referring to FIG. 2, another example or preferred embodiment is depicted. More specifically, there is depicted an intake blow-in door 201A and intake blow-in door 201B, an intake duct 203A and intake duct 203B, an impeller fan 204A and an impeller fan 204B, an exhaust duct 205A and an exhaust duct 205B, an exhaust outlet 206A and exhaust outlet 206B, a main engine outlet 208, and a main engine inlet 210.

Referring to FIG. 2, a twin-thrust-addition system is positioned about a central main propulsion system of vehicle 100 as depicted in FIG. 1, such as an aircraft. The embodiment comprises intake blow-in doors (201A, 201B), each situated at the respective front ends of intake ducts (203A, 203B). Blow-in doors (201A, 201B) are configured to provide selectively actuated closure mechanisms, which are normally sealed during non-thrust phases to minimize drag and/or opened aerodynamically for the case where no thrust addition is required. The paired arrangement can provide a symmetrical layout on opposing sides of the main vehicle structure and/or engine installation.

Referring to FIG. 2, downstream of each intake duct (203A, 203B) is a corresponding impeller fan 204A for duct 203A, and an impeller fan 204B for duct 203B. Each impeller fan (204A, 204B) is embedded within the duct (203A, 203B), respectively, and is configured to accelerate incoming airflow upon activation, thereby creating thrust along the flow path. The pressurized airflow from each fan (204A, 204B) passes into exhaust ducts (205A, 205B), respectively, which are structurally aligned to direct airflow toward the aft portion of the vehicle 100. Ducts (205A, 205B) terminate in exhaust outlets (206A, 206B), through which the energized flow is discharged to generate additional thrust and/or provide secondary effects such as thermal signature reduction and/or noise attenuation, and any equivalent thereof.

Referring to FIG. 2, positioned centrally between the two thrust-addition systems is a main engine inlet 210 and a main engine outlet 208, which can represent the primary propulsion system of the vehicle 100. This configuration illustrates how the thrust-addition duct system operates in conjunction with, but independently of, the main engine. Notably, the two thrust ducts (205A, 205B) may augment thrust symmetrically, support maneuverability, and/or envelop the main engine outlet with airflow of differing temperature and/or velocity for signature suppression.

Referring to FIG. 2, this arrangement exemplifies usage cases that require modular, on-demand thrust assistance, particularly where stealth, noise control, and/or energy efficiency are required. 'Modular' denotes that the thrust addition system is separably mountable and removable without modification of the host platform's primary propulsion system.

Referring to FIG. 2, it will be appreciated that separate mounting locations are provided for each thrust duct (203A, 203B). It would be appreciated if an independent attachment from the main engine could be provided. It will be appreciated that the following geometry is depicted as "bifurcated intake and exhaust."

Referring to FIG. 2, in certain embodiments, the annular ring exhaust outlet surrounding the gas turbine exhaust may be configured to mitigate contrail formation by altering the thermal and humidity characteristics of the engine's exhaust plume. Specifically, the fan-driven ducted airflow delivered through the annular ring outlet is cooler and lower in humidity compared to the turbine's core exhaust. Upon exiting the annular ring, this flow mixes with the hotter, more humid central exhaust, thereby reducing the overall plume temperature and reducing relative humidity. This precludes condensation of water vapour into ice crystals, which is the primary mechanism behind persistent contrail formation at high altitudes. The annular outlet may be shaped and oriented to promote thorough mixing at the wake boundary, leveraging entrainment effects and turbulence. Optionally, the system may include plume temperature sensors and a feedback control loop to adjust fan speed or bypass ratios based on ambient atmospheric conditions, ensuring optimal contrail suppression across flight requirements. The outlet's configuration, both geometrically and operationally, is thus adapted to contrail attenuation without compromising thrust performance.

Referring to FIG. 2, the annular ring exhaust outlet may be configured to mix cooler, lower-humidity duct airflow with the gas turbine exhaust such that the resulting exhaust plume exhibits a reduced propensity for visible contrail formation under standard atmospheric conditions.

Referring to FIG. 3, another preferred embodiment is depicted. More specifically, there are depicted an intake blow-in door 301A and an intake blow-in door 301B, a bifurcated intake duct 303, an impeller fan 304, a bifurcated exhaust duct 305, an exhaust outlet 306A and an exhaust outlet 306B. The thrust-addition duct system features a bifurcated flow path, providing enhanced symmetry and flexibility for various applications.

The system includes intake blow-in doors (301A, 301B), positioned on either side of a bifurcated intake duct 303. Blow-in doors (301A, 301B) may be in the closed position or open position as needed. They are configured to remain shut during non-thrust phases, thereby preserving aerodynamic integrity and/or minimizing drag. When activated, aerodynamic pressure forces one or both doors 301A, 301B into an open position, allowing airflow into each branch of the bifurcated intake duct 303. Similarly, such aerodynamic pressure may also open the optional exhaust door.

Referring to FIG. 3, air entering through the intake duct 303 is directed into a central impeller fan 304, which is embedded at or near a junction of the bifurcated duct 303. Fan 304 can be configured to uniformly accelerate airflow through both branches of the duct 303, ensuring relatively consistent pressure distribution and/or thrust generation across the system.

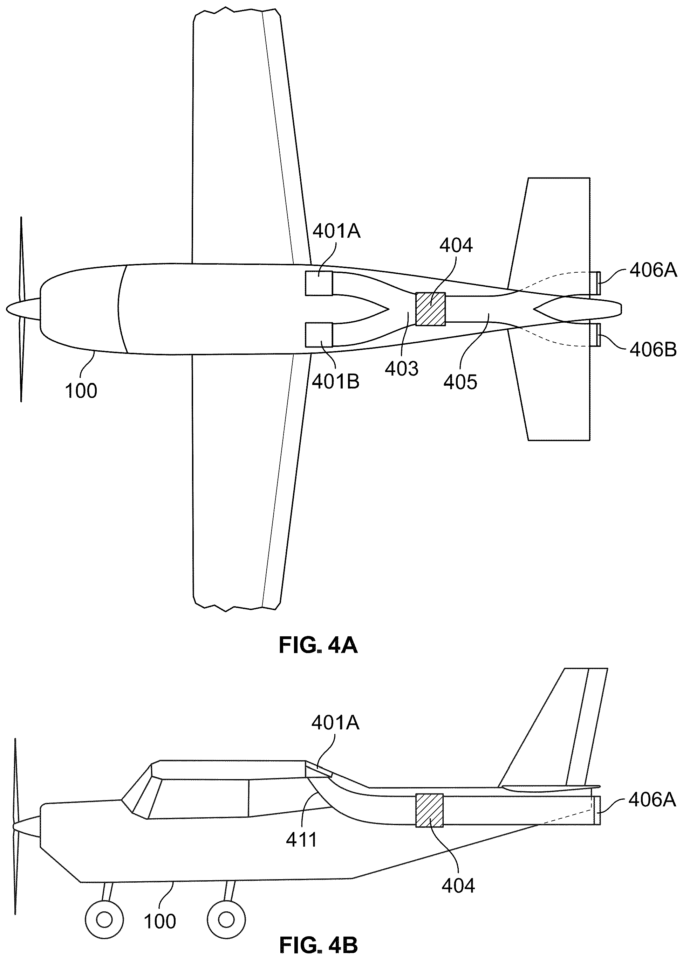

Referring to FIG. 3, downstream of fan 304 is a bifurcated exhaust duct 305, which is configured to channel or direct the accelerated airflow into two separate outlets, specifically exhaust outlets 306A, 306B. This split exhaust geometry enables the system to distribute thrust symmetrically and/or direct flow to multiple aft locations on vehicle 100 as depicted in FIG. 1. In embodiments where this system is integrated with a main engine (see, e.g., FIG. 4A and FIG. 4B), bifurcated exhaust duct 305 may partially envelop the main propulsion flow, thereby contributing to thrust augmentation, pitch stability, and/or reduction in thermal signature.

Referring to FIG. 3, this configuration offers advantages in terms of integration flexibility, particularly for vehicles requiring side-mounted or dual-sided thrust-assist systems, as well as support for operational modes that benefit from symmetrical flow distribution and/or annular exhaust geometries.

Referring to FIG. 3, it will be appreciated that the duct branches can be left or right exhaust segments. It will be appreciated that fan 304 can feed both exhaust arms of the duct 305 symmetrically.

Referring to FIG. 4A and FIG. 4B, another example preferred embodiment is depicted in which vehicle 100 includes any one of a general aviation aircraft or a light aviation aircraft. The bifurcated thrust-addition duct system of FIG. 3 is integrated into the aircraft. FIG. 4A and FIG. 4B illustrate the mounting and spatial orientation of the system in the context of an airframe.

Referring to FIG. 4A and FIG. 4B, the assembly includes a bifurcated intake duct 403 with blow-in intake doors 401A, 401B, one on each intake branch of the duct 403. These doors 401A, 401B remain closed during cruise flight and/or non-augmentation flight to maintain aerodynamic cleanliness and are designed to open aerodynamically in the event of additional thrust requirement. Preferably, the intake doors 401A, 401B are contoured to blend with the airframe, minimizing parasitic drag when in the sealed configuration. Similarly, the optional exhaust door may be designed or configured to open aerodynamically in the event of additional thrust requirements.

Referring to FIG. 4A and FIG. 4B, centrally embedded impeller fan 404 receives incoming airflow for the case where the doors 401A, 401B are open, accelerating it for discharge. Centrally embedded impeller fan 404 is mounted within the central junction of the intake and exhaust duct system (403, 405) and may be electrically driven, drawing energy from an onboard storage system, such as a battery.

Referring to FIG. 4A and FIG. 4B, downstream of fan 404, is a bifurcated exhaust duct 405, which is configured to route the pressurized airflow through separate channels terminating in exhaust outlets 406A, 406B. Outlets 406A, 406B may be oriented to provide symmetric thrust augmentation and/or to influence pitch moment and airflow around the main propulsion flow path, depending on the airframe installation.

Referring to FIG. 4A and FIG. 4B, the entire duct system can be separably mounted to the vehicle 100, such as an aircraft, and positioned such that its operation does not interfere with the main engine of the vehicle 100 but instead supplements thrust selectively to the main engine when required. The configuration enables increased takeoff performance, improved climb rate, and/or optional low-speed control, all while, preferably, maintaining low-drag characteristics during normal or routine flight. Additional benefits may include infrared signature reduction and/or engine noise attenuation when the system is installed adjacent to the primary engine exhaust.

Not specific to any particular drawing, the following further clarifies the term "adapted for thrust addition during periods of increased demand": in certain embodiments, the thrust augmentation system is adapted for thrust addition during periods of increased demand by incorporating a selectively activatable impeller-based propulsion module that supplements the host vehicle's primary thrust source. The system may include: (A) a rotary impeller housed within a duct structure, mechanically coupled to an electric or hybrid-electric motor, (B) an airflow control door that governs the intake of ambient air into the duct, normally maintained in a closed position during cruise or idle conditions, (C) a control module configured to monitor flight parameters and activate the thrust addition system when predefined thresholds are met. The following are operational conditions that may trigger thrust addition: the system is adapted to activate under specific, measurable conditions, including but not limited to: (A) takeoff or climb-out phase: when the aircraft's thrust-to-weight ratio is insufficient for rapid ascent, the controller commands the impeller to engage, providing additional forward thrust; (B) combat or tactical maneuvering: in military applications, the system may be triggered during evasive maneuvers or acceleration bursts requiring thrust beyond the baseline engine output; (C) short-runway operations: For STOL-capable aircraft, the system may be engaged during takeoff roll to reduce required runway length. (D) high-altitude reacceleration: When operating at high altitudes where engine performance is degraded, the impeller system supplements thrust to maintain airspeed or climb rate. The system may be structurally adapted for these conditions through: (A) quick-response actuators on the airflow control door, enabling rapid transition from closed to open state, (B) thermally shielded impeller housing to withstand transient thermal loads during high-power operation, (C) power electronics capable of delivering surge current to the impeller motor during activation events, (D) mounting interfaces designed to isolate vibration and aerodynamic loads during transient thrust events. The control logic may include hysteresis or delay timers to prevent oscillatory activation and ensure stable operation during fluctuating demand conditions.

For signature suppression features, in certain embodiments, the thrust addition system is configured to reduce both thermal and radar cross-section (RCS) signatures through a combination of structural shaping, flow management, and material selection.

For radar signature reduction, the system can achieve radar signature suppression through the following integrated design features: (A) Annular Duct Geometry: The thrust augmentation duct is formed as a concentric annular ring surrounding the primary engine nozzle. This geometry minimizes direct line-of-sight exposure of internal components to radar sources, particularly in frontal and oblique angles. (B) S-Shaped or Curved Inlet Path: The blow-in duct includes a non-linear, serpentine flow path that prevents radar waves from directly reflecting off internal surfaces. This design is inspired by stealth aircraft intake ducts that use curvature to scatter or absorb incoming radar energy; (C) Radar-Absorbing Materials (RAM): Internal surfaces of the duct, impeller housing, and airflow control doors may be coated with RAM to attenuate reflected radar energy. These coatings are selected based on operational radar frequency bands and may include carbon-loaded composites or ferrite-based elastomers; (D) Edge Treatment and Seam Management: The airflow control doors are designed with sawtooth or faceted edges to disrupt specular radar reflections. Seams and panel joints are overlapped or shielded to prevent corner reflections, which are known contributors to RCS spikes; (E) Flush-Mounted or Recessed Doors: When in the closed configuration, the airflow control doors sit flush with the nacelle surface, maintaining a continuous outer mold line and minimizing radar returns from panel gaps or protrusions.

For thermal signature reduction, thermal signature suppression can be achieved through: (A) Secondary Flow Entrainment: The impeller draws ambient air through the duct and mixes it with the hot exhaust plume from the primary engine. This mixing reduces the temperature gradient and infrared (IR) contrast of the exhaust stream; (B) Shrouded Nozzle Design: The annular duct partially encloses the primary nozzle, shielding it from direct line-of-sight and allowing cooler bypass air to envelop the hot core flow; (C) Intermittent Operation: The impeller system is selectively activated only during high-thrust demand, allowing the system to remain dormant (and cooler) during cruise or loiter phases.

For energy recovery mechanism, during descent or deceleration, the impeller or fan may enter a regenerative braking mode (as previously described), converting residual kinetic energy into electrical energy. This can reduce waste heat generation and allow the system to operate at lower thermal output levels during non-augmented phases, further minimizing IR signature.

Referring to FIG. 4A and FIG. 4B, it will be appreciated that the modular, separable installation of the thrust duct system can be done relative to the main engine. It will be appreciated that the aircraft type can be general aviation as a use case. It will be appreciated that fan control can be linked to aircraft energy storage.

Referring to FIG. 5, another example preferred embodiment is depicted. An exhaust outlet is, or includes, an annular ring around a gas turbine exhaust for signature management in infrared (heat) radiation and/or noise attenuation. More specifically, FIG. 5 depicts an intake blow-in door 501 in the closed or open position, an intake duct 503 or inlet, an impeller fan 504, an exhaust duct 505, an annular ring exhaust outlet 506, a gas turbine 102 of the vehicle 100, and a gas turbine exhaust outlet 104 of the vehicle 100. An optional exhaust door may be included which may be set to open or close concurrently with or separately from the intake blow-in door.

Referring to FIG. 5, the thrust-addition duct system is configured explicitly for integration with a gas turbine engine and/or optimized for managing infrared and noise signatures.

Referring to FIG. 5, at the forward end of the system, intake blow-in door 501 is shown in the closed position, sealing the inlet against freestream air during non-thrust-augmenting conditions. Door 501 is configured to open aerodynamically, allowing for increased airflow demand, while preferably maintaining low drag and thermal exposure when inactive. The optional exhaust door may be opened under similar conditions or separately controlled.

Referring to FIG. 5, immediately downstream is intake duct 503, or inlet, which channels incoming air toward the embedded impeller fan 504. Impeller 504 is configured to accelerate the intake airflow using mechanical or electrical power, and its placement ensures efficient pressurization of the air before it is exhausted.

Referring to FIG. 5, air accelerated by impeller 504 enters exhaust duct 505, which routes the energized flow toward the aft section of vehicle 100 as depicted in FIG. 6. Duct 505 may be shaped to preserve momentum and/or may include flow-conditioning features, which are known and not detailed in FIG. 5.

Referring to FIG. 5, the flow is ultimately discharged through annular ring exhaust outlet 506, which may be configured to surround gas turbine exhaust outlet 104 of the adjacent gas turbine 102. This concentric configuration enables the cooler, impeller-driven airflow to envelop the hotter core engine exhaust. As a result, the system may enable (1) infrared signature suppression, by masking the thermal plume of the main engine, and/or (2) noise attenuation, through velocity smoothing and outer mixing of the core stream.

Referring to FIG. 5, the thrust-addition system can serve not only as an auxiliary thrust source but also as a platform for enhancing stealth and/or acoustic performance, particularly in defense and/or noise-sensitive applications.

Referring to FIG. 5, it will be appreciated that a temperature or IR (Infrared) plume gradient can show cool duct airflow surrounding hot turbine exhaust. It will be appreciated that vector lines or acoustic wave indicators can be shown to imply noise attenuation. It would be appreciated that exhaust flow rates or relative velocity notations could be added to indicate energy recovery.

Referring to FIG. 6, another preferred embodiment is depicted. Vehicle 100 includes a combat aircraft with an exhaust outlet in the form of an annular ring surrounding, at least in part, a gas turbine exhaust, designed for signature management in the infrared spectrum and noise attenuation. More specifically, the diagram depicts intake blow-in doors 601A, 601B in the closed position, intake ducts 603A, 603B or inlets, impeller fans 604A, 604B, an exhaust duct 606, an annular ring exhaust outlet 606, a gas turbine 102 of the vehicle 100, and a gas turbine exhaust outlet 104 of the vehicle 100.

Referring to FIG. 6, the thrust-addition duct system is integrated into a combat aircraft, where minimizing infrared and/or acoustic signatures can be critical to mission survivability and stealth performance.

Referring to FIG. 6, the system includes an intake blow-in doors 601A, 601B, which may be open or closed. Doors 601A, 601B are mounted at the forward region of intake ducts 603A, 603B, respectively, which serves as the air inlet for the case where the thrust-addition system is activated. Blow-in doors 601A, 601B can remain sealed during cruise and/or idle phases to reduce aerodynamic drag, and these doors may be configured to open passively in response to pressure differentials for the case where thrust augmentation is needed. An optional exhaust door may be included, which may be set to open or close concurrently with or separately from the intake blow-in door.

Referring to FIG. 6, positioned immediately downstream within the ducts 603A, 603B are impeller fans 604A, 604B, configured to induce and accelerate airflow through the system. Fans 604A, 604B can be powered electrically and may be integrated to provide rapid thrust response, eliminating reliance on chemical combustion and thereby reducing thermal output.

Referring to FIG. 6, accelerated airflow exits fans 604A, 604B into exhaust duct 605, which channels the high-energy air toward the aft section of the vehicle 100, such as an aircraft. Duct 605 terminates in an annular ring exhaust outlet 606, which is structurally arranged to surround the gas turbine exhaust outlet 104 of the adjacent gas turbine 102 of the vehicle 100. It will be appreciated that FIG. 6 depicts two thrust addition systems surrounding a jet engine 102 for illustrative purposes, however, there may be only one thrust addition system or multiple thrust addition systems surrounding the jet engine 102 depending on a desired configuration or application.

Referring to FIG. 6, this concentric outlet configuration enables a sheath of cooler, accelerated air to envelop the hotter core engine exhaust. This surrounding airflow moderates the thermal signature visible to infrared sensors and/or disrupts noise propagation patterns, thereby achieving signature management in both the IR radiation and acoustic spectra, which can be essential features for combat vehicles.

Referring to FIG. 6, these components, together, form an integrated, on-demand thrust augmentation and masking system that operates independently of the central gas turbine (also referred to as a main gas turbine) yet directly enhances its stealth and propulsion performance during critical phases of operation.

Referring to FIG. 6, it will be appreciated that flow lines can illustrate the mixing of cold bypass air with turbine exhaust for IR radiation and/or noise control. It will be appreciated that FIG. 6 depicts the integration of combat aircraft. It will be appreciated that blow-in doors can remain flush during cruise to show "not ordinarily open."

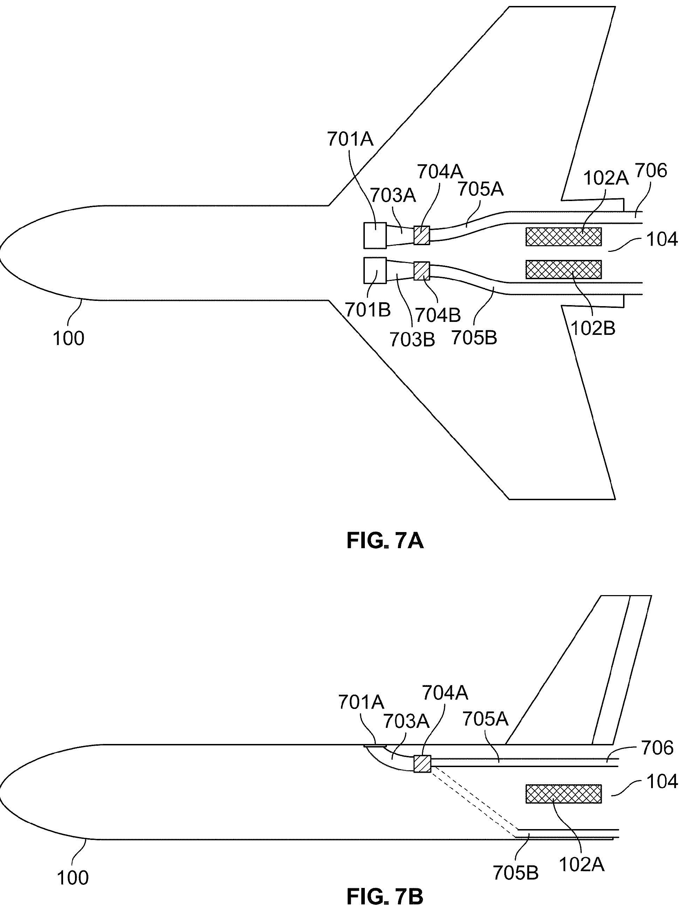

Referring to FIG. 7A and FIG. 7B, another preferred embodiment is depicted. Vehicle 100 includes an uncrewed air system (UAS) or unmanned aerial vehicle (UAV), as depicted with an exhaust outlet 706 in the form of an annular ring around a gas turbine exhaust 104 of a vehicle 100 for signature management in infrared and/or noise attenuation. More specifically, FIG. 7A and FIG. 7B depict intake blow-in doors 701A, 701B, which may be open or closed, intake ducts 703A, 703B or inlets, impeller fans 704A, 704B, exhaust ducts 705A, 705B, an annular ring exhaust outlet 706, gas turbines 102A, 102B, and a gas turbine exhaust outlet 104. An optional exhaust door may be included, which may be set to open or close concurrently with or separately from the intake blow-in door.

Referring to FIG. 7A and FIG. 7B, the thrust-addition duct system is integrated into a UAS or UAV platform, such as a drone. This embodiment emphasizes compactness, signature management, and modularity, which can be key traits for modern unmanned flight applications.

Referring to FIG. 7A and FIG. 7B, at the front of the assembly are intake blow-in doors 701A, 701B. These doors 701A, 701B is configured to seal the forward-facing intake ducts 703A, 703B, respectively, to prevent airflow ingress during non-thrust-additive operation. By optionally remaining closed during cruise and/or idle modes, the doors 701A, 701B of the system minimizes drag and preserves the airframe's aerodynamic efficiency.

Referring to FIG. 7A and FIG. 7B, upon demand, blow-in doors 701A, 701B are configured to open to admit ambient air into intake ducts 703A, 703B, which directs flow toward embedded impeller fans 704A, 704B, respectively. Fans 704A, 704B are situated within ducts 703A, 703B, respectively, and they are configured to induce and accelerate airflow using electrically driven rotor blades, enabling efficient thrust augmentation, preferably without reliance on fuel combustion. The optional exhaust door may open upon demand.

Referring to FIG. 7A and FIG. 7B, the energized airflow exits the fans 704A, 704B into exhaust ducts 705A, 705B, respectively, which channels the airflow rearward through a controlled pathway. Ducts 705A, 705B terminate at an annular ring exhaust outlet 706, which is circumferentially configured to surround the gas turbine exhaust outlet 104 of the gas turbines 102A, 102B integrated within the UAS.

Referring to FIG. 7A and FIG. 7B, this concentric layout enables the cooler, fan-driven airflow to envelop the hot core exhaust, creating a boundary layer that may suppress infrared emissions and/or attenuate engine noise, which can be critical for uncrewed systems operating in contested or acoustically sensitive environments.

Referring to FIG. 7A and FIG. 7B, this embodiment highlights the suitability of the thrust-addition system for stealth-centric UAS missions, offering auxiliary propulsion and/or multispectral signature reduction in a compact, modular form factor.

Referring to FIG. 7A and FIG. 7B, it will be appreciated that the vehicle can include a "UAS" or "uncrewed aerial system" or "uncrewed platform." A modular power unit with regenerative conditions may be included. In some embodiments, the embedded fan functions not only as an airflow accelerator but also as a regenerative energy device during descent or deceleration phases. When airflow enters the duct in a reverse or forward direction during vehicle slowdown or descent, particularly in air vehicles, the aerodynamic drag exerted on the fan blades can cause the rotor to spin freely, converting kinetic airflow energy into rotational mechanical energy. The fan rotor may be mechanically or magnetically coupled to an electric generator (e.g., via a direct-drive or gear-assisted linkage), allowing for the conversion of rotational energy into electrical energy. The generator output may be regulated via power electronics and stored in an onboard energy storage system, such as a lithium-ion battery, capacitor bank, or hybrid energy unit. A control system may detect descent conditions, such as reduced throttle or negative vertical acceleration, and/or adjust the fan blade pitch, duct doors, or generator load accordingly to optimize energy recovery efficiency. In this regenerative braking mode, the fan essentially acts as a wind-driven turbine, capturing otherwise wasted airflow momentum and contributing to onboard electrical reserves without consuming fuel.

A series hybrid vehicle is a type of hybrid electric vehicle (HEV) in which only the electric motor propels the vehicle, such as by driving the wheels, and the internal combustion engine (ICE) is used solely to generate electricity. A parallel hybrid vehicle is a type of hybrid electric vehicle (HEV) that uses both an internal combustion engine (ICE) and an electric motor to power the vehicle. In this configuration, both power sources can operate independently or together to move the vehicle, such as to drive the wheels of the vehicle. There are advantages provided by a parallel system that are not provided by a series hybrid vehicle: (A) smaller battery pack: a parallel hybrid vehicle can use a smaller battery pack, which can permit improved battery management and/or overall vehicle size; (B) regenerative braking: parallel hybrid vehicles rely on regenerative braking to recharge the battery, which can be more efficient than the alternator used in series hybrid vehicles; (C) flexibility: parallel hybrid vehicles can be driven by either the internal combustion engine or the electric motor, which provides better access to driving power and adaptability; (D) higher speed performance: parallel hybrid vehicles perform better at higher speeds; (E) cost effectiveness: parallel hybrid vehicles are less expensive to purchase and/or maintain due to simpler configuration and/or fewer components. The parallel hybrid vehicle operates by utilizing a battery and employing regenerative braking. The battery stores electrical energy used by the electric motor. The battery can be charged in two main ways: (a) from the internal combustion engine (via a generator or motor-generator unit); (b) through regenerative braking, which captures energy during braking. When the vehicle slows down or brakes, the electric motor runs in reverse, acting as a generator. This process converts kinetic energy (from the wheels) into electrical energy. The recovered energy is stored in the battery for later use, improving overall efficiency. Similarly, the present invention sets forth a parallel system that provides numerous efficiencies over current inline serial aircraft thrust systems.

In certain embodiments, the thrust addition system includes a regenerative braking capability that enables recovery of kinetic energy from the rotary impeller during deceleration or deactivation events. The impeller, when operated at high rotational speed to generate supplemental thrust, stores kinetic energy in the form of rotational momentum. Upon transitioning to a lower-thrust state (e.g., aircraft descent, system shutdown, or loiter mode), a controller engages a regenerative mode in which the impeller is electrically decelerated by converting its rotational kinetic energy into electrical energy. This is achieved by temporarily operating the impeller motor in a generator mode, wherein the back electromotive force (back-EMF) generated by continued rotation is harvested and routed to an onboard energy storage system, such as a lithium-ion battery or capacitor bank. The system includes power conditioning electronics configured to manage current flow and voltage regulation during regenerative capture. A braking threshold may be defined to prevent overspeed or voltage spike events, ensuring system protection. This regenerative capture process reduces thermal loads on the impeller system, improves overall energy efficiency, and enables re-use of recovered energy for subsequent thrust augmentation or auxiliary power needs. In some embodiments, the regenerative braking mode is activated passively through rotor freewheeling behaviour and subsequent inductive capture via pulse-width modulated switching. In others, dynamic braking profiles are imposed via software control depending on operational conditions such as altitude, airspeed, or mission profile

In an alternative embodiment, the blow-in intake doors and optional exhaust doors may be biased closed by gravity alone. Each door may be hingedly mounted along a horizontal axis near the top edge of the intake opening such that, when the vehicle is at rest or in forward motion with insufficient aerodynamic pressure, the door naturally falls into the closed position due to its weight. This passive gravity biasing eliminates the need for mechanical springs or actuators. The hinge axis may be oriented transversely across the duct opening, and the center of gravity of the door is located below the hinge line to ensure positive closure. For the case where the vehicle accelerates and airflow pressure across the intake face increases, the external aerodynamic force on the outer surface of the door exceeds the gravitational closing force, causing the door to pivot inward and admit air. When the airflow subsides, the door returns to the closed position under the influence of gravity, thereby restoring aerodynamic smoothness and limiting parasitic drag. In another embodiment, the door may include mechanical springs or actuators to bias the door into a closed position.

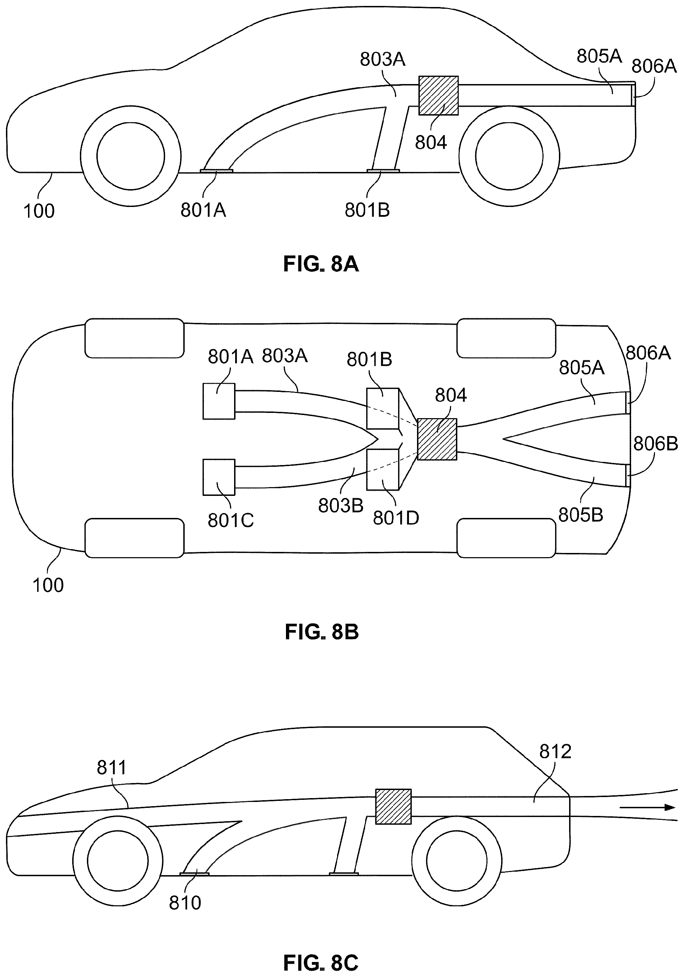

Referring to FIG. 8A, FIG. 8B, and FIG. 8C, another example embodiment of the thrust-addition duct system is depicted, and is configured for use with a wheeled vehicle, such as a performance automobile. A thrust addition duct is depicted for incorporation in vehicle 100. Vehicle 100 includes a wheeled vehicle. More specifically, FIG. 8A and FIG. 8B depict intake blow-in doors (801A, 801B, 801C), 801D with mesh to prevent damage from foreign objects, intake ducts (803A, 803B) or inlets, an impeller fan 804, exhaust ducts (805A, 805B), and exhaust outlets (806A, 806B). The exhaust duct outlets (806A, 806B) can be shaped or closed off to optimize thrust addition, manage infrared signatures, and/or attenuate noise.

Referring to FIG. 8A and FIG. 8B, in a ground vehicle embodiment or wheeled vehicle embodiment, the thrust addition system may be mounted to the underbody of the wheeled vehicle 100, with intake blow-in doors (801A, 801B, 801C, 801D) positioned to face the vehicle's direction of travel and/or to face downwards toward the roadway. During high-speed operation or cornering maneuvers, the doors (for intake and/or exhaust) may be configured to open in response to a threshold aerodynamic pressure, directing air through an integrated duct system toward an impeller or fan 804. The impeller 804 is oriented to accelerate airflow through the system and discharge it from exhaust outlets (806A, 806B), and may be positioned beneath the chassis of vehicle 100 if desired. The high-speed airflow entrains ambient air, resulting in the formation of a localized low-pressure zone directly under the vehicle's floor pan or central tunnel. This pressure differential generates a net downward aerodynamic force, increasing tire contact load and traction, especially during lateral acceleration in turns. The effect mimics that of inverted airfoil-generated downforce but with reduced external aerodynamic drag and a lower vertical profile. The blow-in doors may remain closed under normal driving conditions, eliminating drag. The thrust addition system can be activated manually or automatically via a control system tuned to vehicle telemetry data (e.g., speed, yaw rate, steering angle) or automatically once a threshold speed of the wheeled vehicle has been reached. Optionally, the duct outlets are shaped to direct flow rearward during braking or acceleration phases, or downward during cornering to maximize ground effect

Referring to FIG. 8A and FIG. 8B, an embodiment creates a low-pressure area under a wheeled vehicle 100 to induce downforce and benefit from the addition of thrust from air departing from the duct outlet (806A, 806B). A mesh may be optionally included to protect inlet ducts (801A, 801B, 801C, 801D), reducing the chance of foreign object damage. Using this embodiment may eliminate the need or reduce the size of wings (known and not depicted) added to wheeled vehicles to produce downforce during cornering. The embodiment may be activated episodically while driving, primarily focused on enhancing traction during cornering. There would be the added benefit of no system-induced drag when accelerating or driving on straight roadways. The weight of the embodiment may be less than that of the wing designs currently in use.

Referring to FIG. 8A and FIG. 8B, at the front of the assembly are intake blow-in doors 801A, 801B, 801C, 801D, shown in the closed position. These doors feature a mesh cover specifically designed to protect the intake system from foreign object damage (FOD), since the ground vehicle 100 may operate in environments prone to road debris or particulates. The doors 801A, 801B, 801C, 801D may be configured to remain sealed under normal driving conditions and/or may be configured to open in the case where thrust augmentation or aerodynamic forces are required.

Referring to FIG. 8A and FIG. 8B, behind the blow-in doors, are intake ducts 803A, 803B, which serve as the pathway for ambient airflow entering the system upon activation (opening) of the doors. The ducts 803A, 803B transition toward an integrated impeller fan 804, positioned internally and configured to accelerate the incoming air. The fan 804 may be electrically powered and precisely controlled to modulate airflow during dynamic driving scenarios, such as high-speed cornering.

Referring to FIG. 8A and FIG. 8B, downstream of the impeller 804, are exhaust ducts 805A, 805B, which channel the energized air toward the underside and/or rearward region of the vehicle 100. The ducts 805A, 805B terminate at exhaust outlets 806A, 806B, respectively, which are strategically positioned to discharge high-velocity air from the vehicle's chassis and/or toward targeted aerodynamic surfaces.

Referring to FIG. 8A and FIG. 8B, this high-speed airflow produces a localized low-pressure zone, effectively increasing the net vertical force on the vehicle, thereby enhancing traction and cornering stability without reliance on large fixed aerodynamic wings. Additionally, the system's episodic activation and minimal drag in inactive states may provide a performance benefit without sacrificing straight-line speed or efficiency. Moreover, the exhaust duct outlets can be shaped to meet various design objectives, such as optimizing thrust addition, reducing infrared signatures, or attenuating acoustic emissions, depending on the platform's operational needs.

Referring to FIG. 8A and FIG. 8B, this embodiment demonstrates the system's versatility in terrestrial mobility applications, offering aerospace-grade thrust management repurposed for performance, safety, and stealth in ground-based vehicles.

Referring to FIG. 8A and FIG. 8B, it will be appreciated that streamlines under the chassis can indicate a low-pressure region generated by duct flow. It will be appreciated that a cornering downforce vector can be depicted. It would be appreciated that a mesh protector, known, could be depicted.

Referring to FIG. 8A, FIG. 8B and FIG. 8C, an example embodiment adds thrust to a ground vehicle 100 when accelerating or maintaining higher speeds, where overcoming drag is a priority. Achieving power density in thrust addition can be the primary driving parameter, rather than energy density, due to the defined periods of application. In particular, this embodiment can utilize a reliable, airtight, separable duct arrangement between the intake (801A, 801B, 801C, 801D) and the fan (804) or at least one or more fans, an airflow-inducing mechanism(s), and/or exhaust (806A, 806B) that is configured to create no drag or less drag on the vehicle 100 when not in use. On the vehicle, such as a car, the forward-facing intake 811 (as depicted in FIG. 8C) can be opened when the system is selectively activated.

A no-drag design or configuration, when not in use, is configured to perform thrust-addition functions in discrete phases of vehicle movement and can utilize a separable thrust principle between the thrust addition and the associated main or leading thrust provider (such as an engine). The no-drag design or configuration, when not in use, can be the key driver for efficiency that compensates for system-installed weight. In addition to the foregoing attributes, the embodiments of the thrust addition system can possess other benefits over conventional devices. Electrical features of the embedded impeller or fan (centrally driven or rim-driven) may include improved rise times in revolutions per minute (RPM) and/or lower drive draw and/or lower fuel consumption. The fan 804 can be configured to decelerate airflow during deceleration when inlet doors (801A, 801B, 801C, 801D) are opened and convert rotational energy into regenerative electrical or other forms of energy. The fan 804, or fans, can comprise a rotor(s) coupled to an electric generator, which is configured to convert the rotational energy of the fan into electrical energy during deceleration, thereby enabling regenerative braking for the case where the vehicle or car slows down. This efficiency ensures optimal performance and reliability.

A benefit can be achieved by using a duct door at the point of bifurcation of the duct (as depicted in FIG. 8B), allowing the system to switch to support the creation of a downforce (as shown in FIG. 8C). This adaptability ensures that the system can meet the changing needs of the vehicle, providing a versatile solution that is well-suited to the vehicle's evolving requirements. The primary benefit of the thrust addition system is its ability to provide thrust addition while also generating added downforce. This means that the system not only enhances the vehicle's forward propulsion but also increases the downward force on the vehicle, improving its stability and traction, especially at higher speeds or during cornering. The propulsive efficiency of the fan 804 in the duct system (803A, 803B) can be helpful over about 50 mph (miles per hour) up to about 300 mph, such as the speed ranges that can be attainable with a supercar or a race car. Speed range where aerodynamic drag can become a dominant slowing factor, and can be, for instance, double the rolling resistance at about 50 mph. Referring to FIG. 8C depicts a downforce of 810 applied to the vehicle 100, or car, with thrust addition 812 from the forward-facing intake 811.

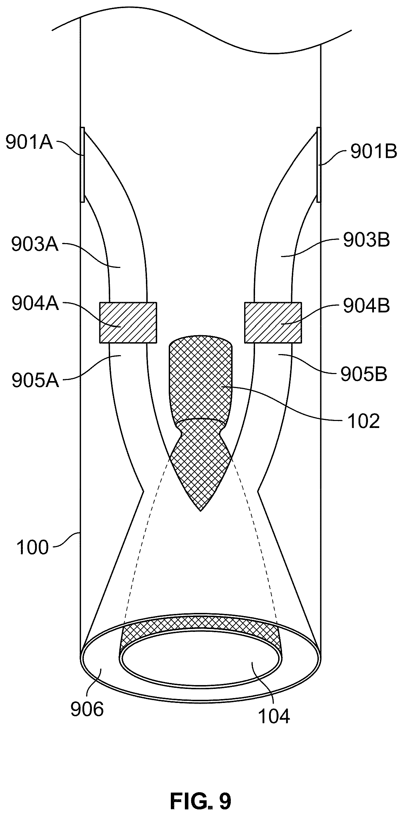

Referring to FIG. 9, another example embodiment is depicted. Vehicle 100 includes a rocket depicted with an exhaust outlet 906 in the form of an annular ring around the rocket exhaust 104, facilitating signature management in infrared and/or noise attenuation. More specifically, FIG. 9 depicts intake blow-in doors (901A, 901B), inlet ducts (903A, 903B), impellers (904A, 904B), such as an electric rim-driven fan, exhaust ducts (905A, 905B), an annular ring exhaust outlet 906, a rocket motor 102, and a rocket motor exhaust outlet 104. Annular ring exhaust outlet 906 surrounds, at least in part, the rocket motor exhaust outlet 104.

Referring to FIG. 9, the thrust-addition duct system is integrated into a rocket vehicle operating within the atmosphere, providing enhanced management of infrared and acoustic signatures during both the boost and cruise phases of flight.

Referring to FIG. 9, at the forward end, the system includes intake blow-in doors (901A, 901B), which seal the inlet ducts 903A, 903B during non-thrust phases. These doors (901A, 901B) may remain closed during idle or passive flight, preventing unwanted drag and exposure. They can be configured to open aerodynamically or upon demand, in cases where thrust augmentation or exhaust masking is required. An optional exhaust door may be included, which may be set to open or close concurrently with or separately from the intake blow-in door.

Referring to FIG. 9, downstream of the inlet are impellers (904A, 904B), such as electric rim-driven fans, embedded within the ducts 903A, 903B, respectively. The impellers (904A, 904B) are configured to accelerate incoming air, providing a pressurized flow without requiring additional fuel combustion, offering energy-efficient support to the rocket's main propulsion system.

Referring to FIG. 9, the energized airflow is routed through exhaust ducts (905A, 905B), which guide the pressurized air toward the aft end of the system. The ducts (905A, 905B) culminate in an annular ring exhaust outlet 905, which is concentrically aligned to surround the rocket motor exhaust outlet 104 of the rocket motor 102 of vehicle 100.

Referring to FIG. 9, this arrangement allows the ducted airflow to envelop the rocket's hot exhaust stream. By surrounding the high-temperature, high-velocity rocket exhaust 104 with a sheath of cooler, fan-driven air via the outlet 906, the system enables infrared signature suppression and noise attenuation, which can be a critical advantage for launch vehicles requiring low detectability during ascent through the atmosphere. Moreover, the absence of additional fuel burn for the impeller-driven augmentation offers improved mass efficiency, extending mission capabilities or reducing onboard propellant demands. The circular, annular configuration enhances uniformity of exhaust masking and may improve plume shaping or vectoring.

Referring to FIG. 9, this embodiment demonstrates the thrust-addition system's adaptability to rocket platforms, enabling stealthier, quieter, and potentially more efficient atmospheric operations.

Referring to FIG. 9, the vehicle can be depicted as a rocket in the atmosphere for IR suppression purposes. It will be appreciated that arrows can illustrate the impact of the surrounding airflow on the rocket plume signature. It will be appreciated that the system can be electrically powered, not chemically fueled, to support low signature and regenerative concepts. It can also be embodied as a separable stage of a rocket to be dropped off and retrieved for reuse.

Referring to FIG. 10B, a thrust-addition system is depicted in an embodiment that surrounds a gas turbine engine 1006. Intake ducts (1013A, 1013B2) are shown leading to impeller fans (1014A, 1014B), respectively, followed by exhaust ducts (1015A, 1015B), respectively, which in turn lead to the annular ring outlet 1016. In comparison with FIG. 10A, it can be seen that traditional systems are provided in a series arrangement, i.e., with the fan, compressor, combustor, turbine and mixer arranged serially, in a sequential or serial position, one after the other as depicted in FIG. 10A. The thrust-addition system (as depicted in FIG. 10B), conversely, provides a parallel system or arrangement wherein one or more thrust-addition systems may be arranged concentrically around the gas turbine system 1006. The present thrust-addition system can be configured to compensate for a smaller air intake. The prior art system of FIG. 10A provides a large intake fan, while the engine 1006 of FIG. 10B, having a thrust-addition system, can permit a smaller frontal area and/or a smaller engine fan. The engine 1006 may have any number of thrust-addition systems, although FIG. 10B illustrates two thrust-addition systems. It will be appreciated that only one may be used, or multiple thrust-addition systems may surround the engine 1006. The turbofan of FIG. 10A can require much more fuel in high-thrust regimes, where, for example, seven (7) times more fuel or more may be consumed compared to the smaller engine with thrust-addition system using alternative power shown in FIG. 10B. Furthermore, the smaller engine 1006 with the thrust-addition system shown in FIG. 10B creates less noise, has a cooler exhaust, thereby reducing heat signature, and reduces contrails due to the air in the thrust-addition fans not being hot or humid. The system of FIG. 10B may be arranged to fit within the wing of an aircraft or below the wing of an aircraft, as with the use of pylon mounting.

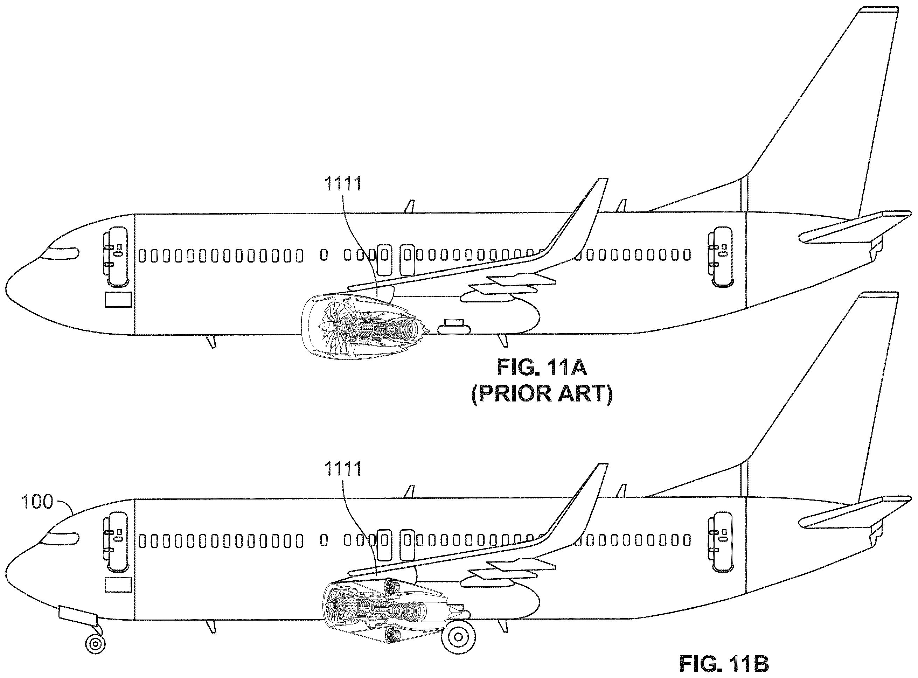

FIG. 11A and FIG. 11B depict side views of embodiments of aircraft used with the engines of FIG. 10A and FIG. 10B, respectively.

Referring to FIG. 11A, the traditional engine is mounted to a pylon assembly 1111 extending downwardly from a portion of a wing of a vehicle 100, such as a commercial aircraft.

Referring to FIG. 11B, the engine includes the thrust addition duct of FIG. 10B, and the engine is mounted to a pylon assembly 1111 of a wing of a vehicle 100, such as a commercial aircraft. The thrust addition duct is incorporated into or with the engine, which is a pylon-mounted engine, such as a gas turbine.

The following describes hardware integration, including sensors, actuators, and control modules, as well as their interaction with a vehicle and/or the system. In certain embodiments, the thrust augmentation system includes a tightly integrated suite of sensors, actuators, and control modules that interact with the host vehicle's avionics and/or propulsion systems to execute the methods in a tangible, machine-implemented manner.

The system may optionally include one or more of the following sensors: (A) airspeed sensors (e.g., pitot-static or ultrasonic) to detect flight velocity, (B) altitude sensors (e.g., barometric or GPS-based) to determine flight phase, (C) thrust demand sensors, such as throttle position sensors or engine control unit (ECU) outputs, (D) door position sensors (e.g., Hall-effect or optical encoders) to confirm airflow control door state, (E) impeller RPM sensors (e.g., magnetic or optical tachometers) to monitor rotational speed. These sensors may provide real-time data to the control module, enabling dynamic decision-making based on environmental and operational conditions.

The system may optionally employ electromechanical actuators to perform physical actions, including: (A) airflow control door actuators: linear or rotary actuators (e.g., stepper motors or servo-driven linkages) that open or close the blower intake door and/or optional exhaust door based on control signals, (B) impeller drive motor: a brushless DC or AC motor that provides rotational energy to the impeller, capable of operating in both motoring and regenerative braking modes, (C) cooling system actuators: valves or fans that regulate thermal management during high-power operation. The controller can directly control each actuator and respond to sensor feedback to ensure safe and efficient operation.

There may be optionally provided a microcontroller-based control unit or flight control computer interface, which executes stored routines to: (A) interpret sensor inputs and determine whether thrust augmentation is required, (B) command the opening of the airflow control door and activation of the impeller motor, (C) monitor system health and log operational events, (D) transition the impeller into regenerative braking mode during descent or deceleration, (E) communicate with the host platform's avionics via standard protocols (e.g., ARINC 429, CAN, or MIL-STD-1553). The control module may be implemented in hardware and software, with firmware stored in non-volatile memory and executed on a real-time processor.

The thrust augmentation system may optionally interface with the host vehicle through: (A) power bus connections for energy supply and regenerative energy return, (B) data bus interfaces for receiving flight phase data and transmitting system status, (C) mechanical mounting points that allow modular attachment and detachment without altering the host's primary propulsion system. This integration ensures that the claimed methods, such as activating the impeller during increased thrust demand or recovering energy during descent, are performed by a specific machine in a non-abstract, physically grounded manner.

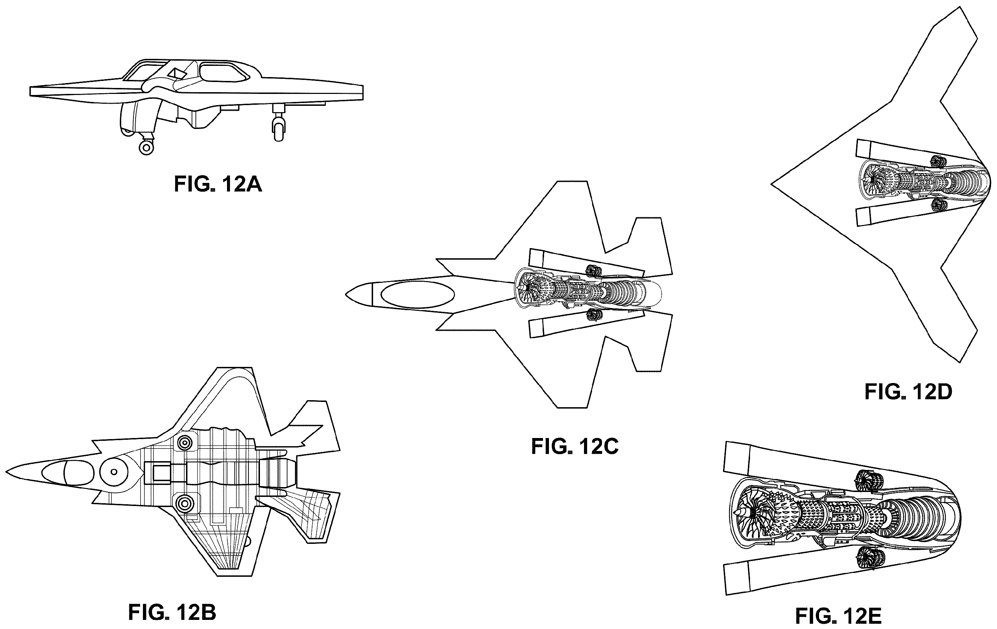

FIGS. 12A through 12E depict embodiments of the thrust addition duct incorporated in a blended wing body of a vehicle.

FIG. 12A depicts a side perspective view of the XRQ-73 drone, a series-hybrid electric propulsion aircraft manufactured by the Northrop Grumman Aerospace Corporation, based in the United States. This drone exemplifies hybrid electric technology for enhanced efficiency and performance. The series hybrid electric propulsion aircraft may include an embodiment of the thrust addition system.

FIG. 12B depicts a top view of a shaft-driven lift system characterized in the Lightning F-35B aircraft, a stealth fighter manufactured by the Lockheed Martin Corporation, based in the USA. The shaft-driven lift system may include the thrust addition system. FIG. 12B highlights the unique design elements that enable vertical takeoff and landing capabilities, critical for modern combat scenarios.

FIG. 12C depicts the same aircraft as FIG. 12B with the added thrust addition system made visible. This modification enhances overall thrust performance, enabling greater payload capacity and/or improved maneuverability in various flight conditions.

FIG. 12D depicts a parallel hybrid electric propulsion drone, which also features the thrust addition system. This configuration highlights the advantages of parallel hybrid systems, where both electric and traditional propulsion systems work in tandem, yielding increased efficiency and reduced emissions during flight.

FIG. 12E depicts an embodiment of the thrust addition system, wherein the blended wing body of the aircraft serves as a parallel hybrid vehicle. The blended wing body configuration provides increased internal space, enabling the accommodation of additional systems and payloads. This configuration advantage makes it particularly attractive for a variety of missions, from surveillance to cargo transport, enhancing the operational flexibility of hybrid aircraft.

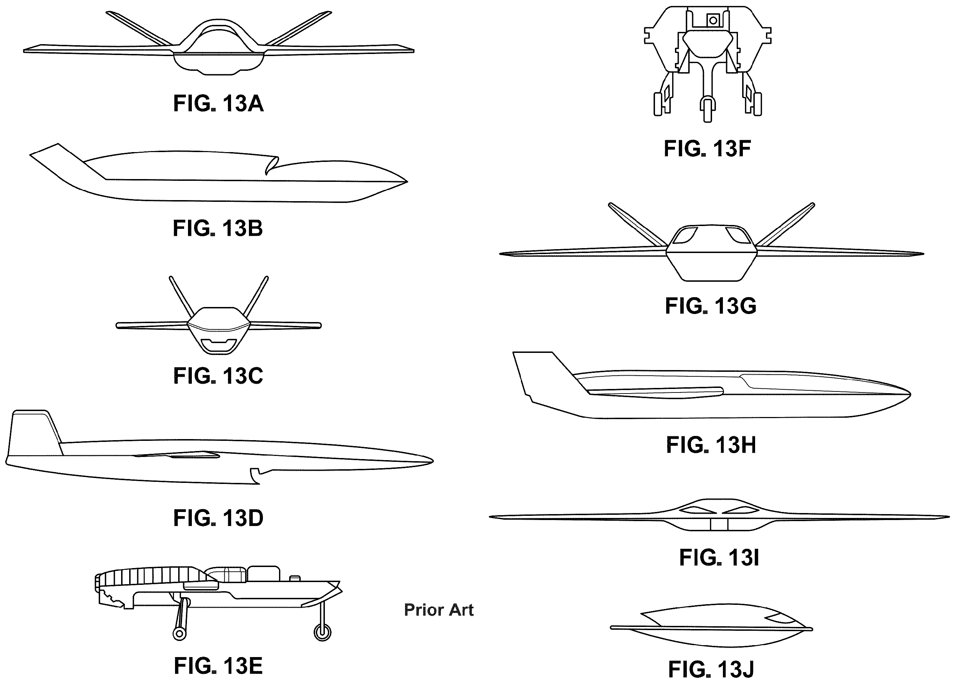

FIGS. 13A through 13J depict embodiments of t a modular aircraft system, showcasing both front and side views for clarity, which could include a thrust addition duct therein (not depicted). Specifically, FIGS. 13A, 13C, 13F, 13G, and 13J illustrate the front views, while Figures 13B, 13D, 13E, 13H, and 13I present the side views. The modular aircraft system may include embodiments of the thrust addition system.

FIGS. 13A and 13B depict the GAMBIT (TRADEMARK) 1 ISR aircraft, designed for versatility and adaptability in various flight scenarios. The GAMBIT (TRADEMARK) aircraft provides a modular aircraft configuration and was developed by General Atomics Aeronautical Systems, Inc., based in the United States.

FIGS. 13C and 13D showcase the GAMBIT (TRADEMARK) 3 High Fidelity Trainer aircraft configured to provide realistic training experiences for pilots.

FIGS. 13E and 13F highlight the GAMBIT (TRADEMARK) CORE airframe platform, which serves as the foundational or base structure from which all other aircraft models are derived.

FIGS. 13G and 13H illustrate the GAMBIT (TRADEMARK) 2 AIR-TO-AIR aircraft, emphasizing its unique capabilities for transforming flight configurations.

FIGS. 13I and 13J feature the GAMBIT (TRADEMARK) 4 Combat Recon aircraft, which are optimized for reconnaissance missions and equipped with advanced surveillance technology. Each GAMBIT (TRADEMARK) aircraft shares approximately 70% of its components with other models, leveraging a universal core configuration that mirrors the production practices of the automotive industry. Just as an automobile manufacturer can efficiently produce a range of vehicles-ranging from economical sedans to luxurious models-from a standard chassis, the GAMBIT (TRADEMARK) aircraft are designed for efficient production and cost-effectiveness while maintaining high performance. The GAMBIT (TRADEMARK) aircraft can incorporate embodiments of the thrust addition system (not depicted), which enhances its versatility and operational capabilities. This system can be installed in a standard core fuselage that serves as the backbone for various aircraft configurations. The design allows for interchangeable wings, enabling the adaptation of different wing types to this core fuselage. This flexibility allows for customization according to specific missions or operational requirements, catering to a range of roles, from training to combat. It is preferred to incorporate the thrust addition system at the "wing root" of the aircraft (not depicted). The wing root is the section where the wing connects to the fuselage, offering an alternative design embodiment that is particularly suited for short take-off capabilities. This option enhances the aircraft's performance during initial flight phases, allowing for greater operational flexibility in diverse environments. Through engineering and innovative design, the GAMBIT (TRADEMARK) aircraft provides modularity in aviation, showcasing adaptable and efficient aircraft systems.

The aspects of the invention have been described in connection with preferred embodiments; it should be understood that various modifications, additions and alterations may be made to the invention by one skilled in the art without departing from the spirit and scope of the invention as defined in the appended claims.

The following is offered as further description of the embodiments, in which any one or more of any technical feature (described in the detailed description, the summary and the claims) may be combinable with any other one or more of any technical feature (described in the detailed description, the summary and the claims). It is understood that each claim in the claims section is an open-ended claim unless stated otherwise. Unless otherwise specified, relational terms used in these specifications should be construed to include certain tolerances that the person skilled in the art would recognize as providing equivalent functionality. For example, the term 'perpendicular' is not necessarily limited to 90.0 degrees. It may include a variation thereof that the person skilled in the art would recognize as providing equivalent functionality for the purposes described for the relevant member or element. Terms such as "about" and "substantially", in the context of configuration, relate generally to disposition, location, or configuration that are either exact or sufficiently close to the location, disposition, or configuration of the relevant element to preserve operability of the element within the disclosure, which does not materially modify the disclosure. Similarly, unless specifically indicated by its context, numerical values should be interpreted to include certain tolerances that a person skilled in the art would recognize as having negligible importance, as they do not materially affect the operability of the disclosure. It will be appreciated that the description and/or drawings identify and describe embodiments of the apparatus (either explicitly or inherently). The apparatus may include any suitable combination and/or permutation of the technical features as identified in the detailed description, as may be required and/or desired to suit a particular technical purpose and/or technical function. It will be appreciated that, where possible and suitable, any one or more of the technical features of the apparatus may be combined with any other one or more of the technical features of the apparatus (in any combination and/or permutation). It will be appreciated that persons skilled in the art would know that the technical features of each embodiment may be deployed (where possible) in other embodiments, even if not expressly stated as such above. It will be appreciated that persons skilled in the art would know that other options may be possible for the configuration of the components of the apparatus to adjust to manufacturing requirements and remain within the scope as described in at least one or more of the claims. This written description provides embodiments, including the best mode, and also enables the person skilled in the art to make and use the embodiments. The claims may define the patentable scope. The written description and/or drawings may help to understand the scope of the claims. It is believed that all the crucial aspects of the disclosed subject matter have been provided in this document. The foregoing has outlined the non-limiting embodiments (examples). The description is made for particular non-limiting embodiments (examples). It is understood that the non-limiting embodiments are merely illustrative as examples.

## Claims

1. A thrust-addition duct system for installation on a vehicle having a vehicle exhaust, comprising:
a duct having a blow-in intake door;
a fan embedded in the duct; and
an exhaust outlet configured to surround, at least in part, the vehicle exhaust, and the exhaust outlet also configured to be in fluid communication with the duct.

2. The system of claim 1 wherein the duct is closed to free stream air for the case where the fan generates no thrust.

3. The system of claim 1 or 2, wherein:
the duct is open to the free stream air for the case where the fan thrust is selectively generated by the fan.

4. The system of any one of claims 1 to 3, wherein the blow-in intake door is configured to be maintained in a closed configuration during normal flight and optionally further comprising:
a controller configured to activate the fan and open the blow-in intake door when an increase in thrust is commanded.

5. The system of any one of claims 1 to 4, wherein the exhaust is annular and disposed concentrically around a jet engine exhaust nozzle, optionally wherein the exhaust outlet includes an annular ring configured to surround the vehicle exhaust.

6. The system of any one of claims 1 to 5, wherein the blow-in intake door is configured to open in response to aerodynamic force.

7. The system of any one of claims 1 to 6, wherein the exhaust outlet is configured to reduce an infrared signature of the gas turbine exhaust, to reduce the noise signature of the gas turbine exhaust, and/or to reduce contrails of the gas turbine exhaust.

8. The system of any one of claims 1 to 7, wherein the fan is configured to decelerate airflow during descent and convert rotational energy into regenerative electrical energy.

9. The system of any one of claims 1 to 8, wherein the fan comprises:
a rotor coupled to an electric generator configured to convert rotational energy of the fan into electrical energy during airflow reversal or deceleration, such that regenerative braking of the fan occurs for the case where the vehicle descends or reduces speed.

10. The system of claim 9, wherein the electrical energy to be generated by the electric generator is stored in an onboard energy storage system selected from the group consisting of a lithium-ion battery, a capacitor bank, and a hybrid power management unit.

11. The system of any one of claims 1 to 10, wherein the duct comprises:
a bifurcated exhaust duct to provide symmetrical thrust addition.

12. The system of any one of claims 1 to 11, wherein the fan is positioned downstream of the blow-in intake door and upstream of the exhaust outlet.

13. The system of any one of claims 1 to 12, wherein the exhaust outlet is configured to mix fan-driven duct air with turbine exhaust to any one of:
reduce a temperature of air exiting the exhaust outlet; and
lower a relative humidity of air exiting the exhaust outlet,
thereby mitigating visible contrail formation during vehicular movement.

14. The system of any one of claims 1 to 13, further comprising a control system, wherein the exhaust outlet has a door and the control system is configured to adjust any one of the fan speed of the fan and the door of the exhaust outlet based on signals from an ambient humidity sensor and/or a temperature sensor.

15. The system of any one of claims 1 to 14, wherein the exhaust outlet is configured to mix cooler, lower-humidity duct airflow with the exhaust such that a resulting exhaust plume exhibits a reduced propensity for visible contrail formation under standard atmospheric conditions.
